(19) Europäisches Patentamt
European Patent Office
Office européen des brevets

(11) **EP 3 792 231 A1**

(12) **DEMANDE DE BREVET EUROPEEN**

(43) Date de publication:
**17.03.2021 Bulletin 2021/11**

(51) Int Cl.:
**C04B 28/06** *(2006.01)*  **C04B 28/16** *(2006.01)*
**C04B 38/02** *(2006.01)*  **C04B 38/10** *(2006.01)*

(21) Numéro de dépôt: **20205260.1**

(22) Date de dépôt: **13.01.2011**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.01.2010 FR 1050212**

(62) Numéro(s) de document de la (des) demande(s) initiale(s) en application de l'article 76 CBE:
**11704288.7 / 2 523 925**

(71) Demandeur: **Kerneos**
**92800 Puteaux (FR)**

(72) Inventeurs:
• **PRART, Evelyne**
**93500 Pantin (FR)**

• **FROUIN, Laurent**
**94240 L'HAY LES ROSES (FR)**
• **TAQUET, Pascal**
**38540 GRENAY (FR)**
• **MAHUAOUI, Jamel**
**69008 Lyon (FR)**

(74) Mandataire: **Lavoix**
**2, place d'Estienne d'Orves**
**75441 Paris Cedex 09 (FR)**

Remarques:
Cette demande a été déposée le 02-11-2020 comme demande divisionnaire de la demande mentionnée sous le code INID 62.

(54) **MATERIAU POUR ISOLATION THERMIQUE ET SON PROCEDE DE FABRICATION**

(57)    L'invention concerne un matériau thermo-isolant à structure cellulaire comprenant en poids par rapport au poids total du matériau :
- 4 à 96% d'un liant hydraulique caractérisé avant mise en contact avec de l'eau ,en ce qu'il comprend au moins une phase choisie parmi C3A, CA, C12A7, C11A7CaF2, C4A3$ (yée lemite), C2A(1-x)Fx (avec x appartient à ]0, 1]), des phases amorphes hydrauliques présentant un ratio molaire C/A compris entre 0,3 et 15 et tel que les teneurs cumulées en Al2O3 de ces phases soient comprises entre 3 et 70 % en poids du total du liant hydraulique,
- 4 à 96% d'au moins une charge,
ledit matériau présentant une porosité en volume comprise entre 70% et 95%.
    L'invention concerne également l'utilisation d'une mousse minérale pour fabriquer ledit matériau thermo-isolant ainsi que les procédés de fabrication de ladite mousse minérale.

EP 3 792 231 A1

**Description**

La présente invention concerne un matériau thermo-isolant à structure cellulaire, une mousse minérale permettant d'obtenir ledit matériau thermo-isolant ainsi que les procédés de fabrication de ces matériaux.

Les matériaux d'isolation thermique connaissent à l'heure actuelle une réelle expansion. En effet, on estime en France que le secteur du bâtiment est responsable d'environ 46% de l'énergie totale consommée et de 25% des rejets globaux en $CO_2$. Les réglementations concernant les performances énergétiques pour les bâtiments prévoient des diminutions importantes de la consommation en énergie des habitations.

La réalisation de ces objectifs nécessite un changement profond des habitudes du consommateur mais également des innovations radicales dans le domaine des technologies d'isolation thermique des bâtiments.

De plus, pour traiter efficacement la rénovation du parc existant d'habitation, il est important que ces nouvelles technologies soient facilement mises en œuvre par les applicateurs et ceci à un prix compatible avec le budget des propriétaires.

Parmi les techniques d'isolation, on distingue en particulier pour le marché de la rénovation, les techniques d'isolation par l'intérieur et d'isolation par l'extérieur.

De nouvelles techniques constructives se développent également comme le monomur et l'utilisation de panneaux porteurs de type sandwich comprenant une ossature remplie de matériaux isolants.

Les matériaux isolants utilisés traditionnellement aujourd'hui dans les techniques d'isolation citées ci-dessus sont de diverses natures :

- minérale : laines de verre, de roche, vermiculites,
- polymères : mousse polystyrène expansée (EPS) et extrudée (XPS), mousse polyuréthane (PU), mousse polyisocyanurate (PIR),
- origine naturelle végétale ou animale : cellulose vrac ou injectée, chanvre, lin, bois (fibres, copeaux, board), paille, liège, coton, coco, laine de mouton, plumes de canard.

Leur performance intrinsèque vis-à-vis de l'isolation thermique est caractérisée par le coefficient de conductivité thermique $\lambda$. Ce coefficient $\lambda$ correspond au flux de chaleur qui traverse 1 $m^2$ d'une paroi de 1 m d'épaisseur, lorsque la différence de température entre les 2 faces est de 1 degré ($\lambda$ est exprimé en W / m.°C (Celsius ou Kelvin)). Plus ce coefficient est faible, plus le matériau est performant du point de vue de l'isolation thermique.

Tous les matériaux précédemment cités présentent des inconvénients et des limites d'utilisation. Les laines de roche, de verre, les vermiculites ont tendance à se « tasser » dans le temps conduisant à des pertes d'efficacité. De plus, pour répondre aux exigences des nouvelles réglementations en matière de performance énergétique (RT 2005), il est nécessaire pour atteindre ces performances d'augmenter l'épaisseur des matériaux, ce qui pose des problèmes de perte d'espace utile (par exemple: 400 mm d'épaisseur pour la laine de verre...). Les améliorations de l'efficacité intrinsèque de ce type de matériaux via l'augmentation de la densité restent limitées.

Les polymères qui possèdent des valeurs de conductivité thermique dans la fourchette basse (0,029 pour le PIR) présentent des inconvénients liés aux problèmes de recyclage dont notamment la nécessité de séparer le polymère des matériaux de construction lors de la mise en décharge. En outre, ils posent des problèmes de résistance au feu et de dégagement potentiel de vapeurs toxiques en cas d'incendie (cas des mousses PU).

Les matériaux d'origine naturelle ont par définition des performances « variables » d'un lot à un autre et des problèmes de durabilité dus au tassement.

Par souci de clarification dans ce qui suit, on adoptera les conventions suivantes :
Tous les pourcentages en poids, sans indication spécifique contraire, sont exprimés par rapport aux poids de matière sèche des compositions.

• **Coulis de ciment** :

Par coulis de ciment on entend une composition dans son état plastique obtenue par ajout d'au moins un liant hydraulique minéral, d'eau, et éventuellement d'adjuvants et additifs spécifiques, de sulfate de calcium, de charges.

• **Mousse aqueuse** :

Ce terme désigne les mousses constituées par au moins un gaz, notamment de l'air et un solvant qui peut être de l'eau. Ces mousses ne contiennent pas de liant minéral.

Elles sont caractérisées au temps initial par leur coefficient d'expansion initial = volume total au temps initial/ volume de solution utilisé pour générer la mousse.

On entend par temps initial le moment où l'opérateur a terminé l'entraînement d'air pour générer la mousse, tel que décrit dans le brevet FR2913351 (A1).

Instables par nature, elles sont également caractérisées par leur stabilité dans le temps communément mesurée par le temps de demi-vie, c'est-à-dire le temps nécessaire pour obtenir un drainage équivalent à la moitié de la totalité du liquide utilisé pour les générer.

La stabilité de ces mousses peut être améliorée par le choix judicieux des tensio-actifs associés à des agents stabilisateurs de mousses tels que par exemple les alkanolamides, hydrocolloides, protéines cités dans les demandes de brevet et brevets WO/2008/020246, WO/2006/067064 et US 4,218,490.

**• Mousse minérale** :

Ce terme désigne les mousses comprenant au moins un gaz, notamment de l'air, au moins un solvant qui peut être de l'eau, au moins un liant hydraulique minéral et au moins une charge, notamment un filler, dans les proportions définies ci-après.

Ces mousses comme les précédentes vont évoluer dans le temps et ne seront stabilisées que lorsque le liant minéral aura réagi pour « figer » la structure du matériau.

**• Mousse minérale durcie** :

Ce terme désigne les mousses minérales obtenues au final après réaction (hydratation) du liant hydraulique qui va figer, via la percolation du réseau d'hydrates, le squelette de la mousse minérale. Il désigne également le matériau thermo-isolant à structure cellulaire obtenu par durcissement de la mousse minérale.

Selon une variante de l'invention, le matériau thermo-isolant est obtenu à partir d'un coulis de ciment à base de liant hydraulique alumineux comportant des charges creuses de faible densité, par durcissement du coulis de ciment.

**• Liant hydraulique alumineux (noté LHA)** :

Ce terme désigne des liants hydrauliques comprenant au moins une phase choisie parmi $C_3A$, $CA$, $C_{12}A_7$, $C_{11}A_7CaF_2$, $C_4A_3\$$ (yée lemite), $C_2A(1-x)F_x$ (avec x appartient à $]0, 1]$), des phases amorphes hydrauliques présentant un ratio molaire C/A compris entre 0,3 et 15 et tels que les teneurs cumulées en $Al_2O_3$ de ces phases soient comprises entre 3 et 70 % en poids du total du liant hydraulique, préférentiellement entre 7 et 50% en poids et mieux entre 20 et 30% en poids.

Dans des réalisations particulières, ce liant peut contenir éventuellement également en poids par rapport au poids total du liant :

- 0 à 90%, de préférence jusqu'à 70%, mieux jusqu'à 50% et encore mieux jusqu'à 40% de sulfate de calcium ou d'une source de sulfate de calcium, et ,
- 0 à 10%, de préférence 0 à moins de 5% de ciment Portland. Parallèlement, des mousses minérales durcies à base de liant hydraulique ont été développées pour des applications diverses. De nombreux brevets décrivent notamment la fabrication de bétons cellulaires par incorporation de mousses aqueuses ou génération de gaz in situ par décomposition d'aluminium métal.

Des bétons légers présentant des propriétés de résistance au gel-dégel améliorées grâce à un réseau de bulles d'air absorbant les contraintes et limitant la propagation des fissures ont fait l'objet de nombreuses publications. On peut notamment citer le brevet US 7,288,147.

On connaît également l'utilisation de coulis allégés de ciment pour la cémentation des puits de pétrole dans des roches ou terrains fragiles tels que les fonds sédimentaires sous marins décrit dans la demande de brevet US 2005/126781.

On connaît par le document GB-1,506,417 des mousses minérales durcies obtenues à partir de liants de type ettringite, c'est-à-dire à partir de mélanges de ciment alumineux et de sulfate de calcium. US-4,670,055 décrit aussi des liants à base d'aluminate et de sulfate de calcium. Toutefois, ces liants sont utilisés pour fabriquer des blocs de mousse de silicate de calcium de densité très élevée. Par GB-1578470 et GB-2162506, on connaît des mousses minérales durcies obtenues à partir de ciment alumineux et de quantités importantes de silicates. Les matériaux cellulaires obtenus après durcissement de ces mousses minérales ont l'inconvénient de présenter des propriétés de résistance mécanique non satisfaisantes et des densités très élevées.

Le document WO00/23395 décrit des compositions de mortier aérées à base d'aluminate de calcium et comprenant une charge sous forme de granulat. Les matériaux isolants obtenus à l'aide de ces compositions ont une densité très élevée et donc des performances insuffisantes en termes d'isolation. Le document RU2305087 décrit des mousses minérales durcies à base d'aluminate de calcium, de gypse et de sable. Les matériaux isolants obtenus dans ce document ont une conductivité thermique élevée et une densité élevée. Des mousses minérales durcies ont également été développées pour des applications anti feu où, de par leurs caractéristiques de non combustibilité intrinsèques, voire leurs propriétés réfractaires, elles présentent un avantage évident par rapport aux matériaux comportant des composants à base organique ou polymères. Cependant, si ces mousses minérales durcies satisfont pleinement aux exigences anti feu, leurs valeurs de conductivité $\lambda$ restent trop élevées pour des applications de type isolation thermique, qui nécessitent des valeurs de conductivité à 20°C égales ou inférieures à 0,2 W/m.°C, mieux égales ou inférieures à 0,15 W/m.°C, voire égales ou inférieures à 0,08 W/m.°C et de manière préférentielle égales ou inférieures à 0,045 W/ m.°C. Des propriétés de 0,2 W/m.°C ont été obtenues avec des matériaux dérivés de la silice, comme décrit dans DE3227079. De tels matériaux présentent toutefois l'inconvénient de présenter des masses volumiques élevées (400 à 600 kg/m$^3$), des performances mécaniques et de résistance au feu peu satisfaisantes. Des matériaux de basse conductivité thermique ont également été décrits dans EP-2 093 201. Il s'agit de mousses de chaux obtenues à partir d'un mélange de chaux hydraulique et de ciment. Toutefois, l'emploi de chaux hydraulique présente l'inconvénient de conduire à des produits de densité très élevée. Des ciments alumineux ont également été décrits dans JP-06056497 pour obtenir de telles performances de conductivité. Toutefois ces matériaux sont essentiellement à base de pierre ponce, et d'une densité très élevée (800kg/m$^3$) car peu aérés. Or, il est très difficile techniquement d'atteindre ces valeurs de conductivité thermique à 20°C tout en conservant un matériau qui ait un minimum de tenue mécanique et qui garde son intégrité physique, c'est-à-dire qu'il ne s'effondre pas sous son propre poids. Et l'obtention de matériaux de densité plus faible que ceux de l'art antérieur est également un problème qui a été résolu par l'invention.

L'efficacité isolante intrinsèque d'un matériau obtenue à partir d'une mousse minérale durcie de ciment sera d'autant plus élevée que l'on aura une fraction élevée de bulles de gaz dans le matériau et que ces bulles seront les plus fines possibles et non connectées pour éviter les ponts thermiques. Or, l'accroissement du volume poreux pour une répartition de diamètres de pores donnée, bénéfique pour le caractère isolant se traduit par une fragilité accrue du matériau ce qui explique cette limite atteinte avec les mousses minérales durcies anti-feu.

Enfin, un procédé pour obtenir des mousses minérales durcies thermo-isolantes est décrit dans le brevet EP 0 121 524 comprenant l'obtention d'un courant de mousse aqueuse par moussage mécanique avec de l'air, d'une solution aqueuse d'un alcool polyvinylique et d'un agent dispersant suivie de l'ajout au courant de mousse aqueuse d'une solution aqueuse comprenant de l'oxyde de magnésium et du métaborate de baryum. Dans ce brevet, l'obtention d'une mousse aqueuse stable est rendue possible grâce à l'utilisation combinée d'un alcool polyvinylique et d'un métaborate de sodium ou de baryum. Le sel d'acide borique joue ici le rôle de réticulant de l'alcool polyvinylique permettant de fixer la taille des bulles d'air incluses dans le matériau. On a donc une stabilisation chimique de la mousse aqueuse.

Il existe un besoin de trouver des nouvelles solutions à la fois efficaces, faciles à mettre en œuvre et économiques respectant la sécurité des applicateurs et des utilisateurs et permettant l'obtention d'un bon compromis entre ouvrabilité, tenue mécanique, faible densité et isolation thermique.

Le demandeur a découvert de manière surprenante que des compositions de liant hydraulique alumineux particulières permettaient d'incorporer de grandes quantités d'air sous forme finement divisée, notamment sous forme de bulles, ou sous forme de charges creuses de faible densité et d'obtenir après durcissement du liant un matériau ayant une conductivité thermique faible et une résistance mécanique élevée, en particulier une résistance à la compression élevée. Ainsi il a pu obtenir un matériau à structure cellulaire obtenu à partir d'une mousse minérale durcie de ciment présentant d'excellentes propriétés d'isolation thermique mais également une résistance mécanique suffisante à court terme permettant d'utiliser ce matériau dans de nombreuses applications nécessitant notamment la mise en place in situ dudit matériau.

De telles valeurs de résistance à la compression ne peuvent pas être obtenues lorsque des liants constitués essentiellement de ciment Portland sont employés. L'invention concerne un matériau thermo-isolant à structure cellulaire comprenant en poids par rapport au poids total du matériau :

a) 4 à 96% d'une matrice cimentaire obtenue par hydratation d'un liant hydraulique caractérisé, avant mise en contact avec de l'eau, en ce qu'il comprend au moins une phase choisie parmi C3A, CA, C12A7, C11A7CaF2, C4A3$ (yée lemite), C2A(1-x)Fx (avec x appartient à ]0, 1]), des phases amorphes hydrauliques présentant un ratio molaire C/A compris entre 0,3 et 15 et tel que les teneurs cumulées en Al2O3 de ces phases soient comprises entre 3 et 70 % en poids du total du liant hydraulique, préférentiellement entre 7 et 50% en poids et préférentiellement entre 20 et 30% en poids,

b) 4 à 96% d'au moins une charge, de préférence un filler.

Ledit matériau présente avantageusement un coefficient de conductivité thermique à 20°C, égal ou inférieur à 0,2 W/m°C, mieux égal ou inférieur à 0,15 W/m°C, de préférence égal ou inférieur à 0,08 W/m°C, mieux inférieur ou égal à 0,045 W/m°C, et de manière encore plus préférée, égal ou inférieur à 0,04 W/m°C.

De manière préférentielle, le liant du matériau isolant suivant l'invention comprend en outre par rapport au poids total du liant

- 0 à 90%, de préférence jusqu'à 70%, mieux jusqu'à 50% et encore mieux jusqu'à 40% de sulfate de calcium ou d'une source de sulfate de calcium, et,
  0 à moins de 5% de ciment portland.

De préférence la matrice cimentaire représente de 10 à 80%, et mieux de 20 à 60% en poids du matériau thermo-isolant à structure cellulaire.

Par hydratation d'un liant hydraulique, on entend la mise en contact du liant hydraulique sec avec de l'eau, le rapport pondéral eau/liant hydraulique étant généralement compris entre 0,1 et 0,7, de préférence entre 0,15 et 0,5.

Avantageusement, les mousses minérales de l'invention sont préparées en utilisant de l'eau comme solvant et ce rapport pondéral caractérise les mousses minérales de l'invention.

Cette hydratation peut être effectuée lors de la préparation du coulis de ciment comme décrit ci après, ou à tout moment par introduction d'eau ou d'un solvant aqueux lors de la préparation de la mousse minérale.

L'invention concerne également un procédé de fabrication du matériau thermo-isolant, ou mousse minérale durcie, ce procédé comprenant la fabrication d'une mousse minérale ou d'un coulis de ciment comportant des charges creuses de faible densité qui va être décrite ci-dessous et une étape de prise ou de durcissement, d'une durée plus ou moins longue en fonction des additifs qui ont été employés.

L'invention concerne également la mousse minérale permettant d'obtenir après durcissement le matériau thermo-isolant ainsi que le procédé de préparation de la mousse minérale.

L'invention concerne en outre le coulis de ciment comportant des charges creuses de faible densité permettant d'obtenir après durcissement le matériau thermo-isolant ainsi que le procédé de préparation de ce coulis de ciment.

Pour atteindre des valeurs de conductivité thermique compatibles avec des applications de type isolation thermique, il est non seulement nécessaire de produire une mousse aqueuse très fine à l'état initial, mais également souhaitable de disposer d'une matrice hydraulique qui permette d'obtenir une mousse minérale présentant d'une part une ouvrabilité suffisante pour permettre sa mise en place et d'autre part le développement aux très jeunes âges d'un réseau d'hydrates permettant de stabiliser la mousse minérale dans sa configuration plastique avant que n'interviennent les phénomènes de mûrissement d'Oswald.

Le demandeur a découvert que l'utilisation de liants hydrauliques alumineux LHA est particulièrement bien adaptée pour obtenir un compromis entre les propriétés ouvrabilité de la mousse/ développement précoce du réseau d'hydrates.

Selon une variante, ces propriétés peuvent être obtenues par l'utilisation de charges creuses de faible densité dispersées dans un coulis de ciment à base de tels liants hydrauliques alumineux LHA.

Selon une variante préférée, ces propriétés sont renforcées par l'utilisation de charges choisies parmi les charges réactives.

Le très fort potentiel hydraulique de ces phases, potentiel qui se développe dès la mise en contact des liants LHA avec de l'eau entraîne immédiatement la nucléation d'un nombre important d'hydrates de faibles tailles (qui peuvent être submicroniques à microniques) lesquels :

- dans un premier temps stabilisent la mousse minérale dans sa phase plastique (prévenant de ce fait le mûrissement d'Ostwald) pendant une durée qui peut être ajustable en fonction de l'ouvrabilité désirée, entre 5 et 30 minutes, voire être supérieure à 30 minutes
- dans un second temps assurent par percolation la réalisation d'un squelette minéral hydraté qui va assurer l'acquisition des performances mécaniques aux jeunes âges et permettre l'obtention de la mousse minérale durcie suivant l'invention et/ou du matériau thermo-isolant selon l'invention.

Il est particulièrement intéressant d'utiliser des liants hydrauliques comprenant du sulfate de calcium ou une source de sulfate de calcium, afin de promouvoir la génération de phases ettringittiques et d'alumine hydratée qui présentent le double avantage de renforcer les propriétés mécaniques de la mousse minérale durcie et d'améliorer également la résistance au feu de cette dernière.

Ces liants sont particulièrement intéressants pour l'obtention d'une résistance mécanique précoce élevée. A 24 h, les matériaux de l'invention présentent au moins 80% de leur résistance mécanique finale, ce qui n'est pas le cas des matériaux dont le liant est constitué essentiellement de ciment Portland.

Ces liants permettent également de contrôler et de limiter le retrait du matériau au durcissement.

L'utilisation de liant hydraulique LHA selon l'invention permet d'obtenir des mousses minérales durcies exemptes de polymères notamment de polymères de type EPS, XPS, PU, PIR, ces mousses minérales durcies ayant les propriétés de conductivité thermique recherchées et une bonne résistance au feu.

Ce type de liants hydrauliques LHA permet donc d'améliorer la résistance au feu des matériaux, ce qui constitue une nette amélioration par rapport aux mousses à base de polymères de type EPS, XPS, PU, PIR.

En outre l'utilisation de ce type de liant hydraulique LHA améliore la robustesse de la fabrication de la mousse minérale en conditions industrielles puisque la sensibilité au mûrissement d'Ostwald devient moins problématique et que l'optimisation du système de tensio actifs et des agents stabilisateurs de mousse devient par conséquent moins critique.

A titre d'exemples non limitatifs, les liants suivant l'invention pourront contenir des ciments alumineux et des ciments de type sulfo aluminates de calcium qui pourront être associés éventuellement à une source de sulfate de calcium.

Des exemples non limitatifs de ciments alumineux commerciaux sont par exemple les Secar 71, Secar 51, ciment Fondu, Ternal RG, Ternal EV commercialisés par la société Kerneos, et les ciments alumineux commercialisés par les sociétés Calucem, Cementos Molins et par les sociétés TMC et Denka au japon.

Des exemples non limitatifs de ciments sulfo alumineux commerciaux sont par exemple le Rapidset commercialisé par CTS, le ciment Alipré commercialisé par la société Italcementi, les sulfoaluminates de calcium commercialisés par Polarbear et Lionhead.

Les liants hydrauliques alumineux LHA suivant l'invention, de par leur réactivité, permettent de développer rapidement un réseau d'hydrates qui percole, fige le diamètre des bulles et constitue le squelette minéral de la mousse minérale durcie. Ce phénomène intervient quel que soit l'agent utilisé pour obtenir la mousse aqueuse, c'est à dire quel que soit l'agent moussant, l'agent entraîneur d'air ou l'agent générateur de gaz. En effet, il semble que les mécanismes sous tendant l'invention correspondent à une stabilisation minérale obtenue grâce à la formation des hydrates qui figent à un stade précoce les inclusions de gaz ou d'air. On obtient donc ainsi une mousse minérale durcie présentant des bulles de petites tailles et distribuées de façon très homogène.

L'invention se distingue donc des compositions de mousses minérales durcies décrites dans l'art antérieur et notamment dans le brevet EP 0 121 524 par le choix spécifique d'un liant hydraulique LHA. En effet, la réactivité importante des composés minéraux utilisés permet d'obtenir une mousse minérale durcie d'excellente qualité sans nécessiter par exemple l'utilisation de la combinaison alcool polyvinylique / sel de l'acide borique. Par conséquent, la mousse minérale ainsi que la mousse minérale durcie et le matériau thermo-isolant à structure cellulaire de l'invention sont de préférence exempts de la combinaison alcool polyvinylique / sel de l'acide borique.

Par rapport à l'art antérieur qui porte sur l'optimisation des systèmes surfactants afin de limiter le mûrissement d'Ostwald, la présente invention permet donc de gérer la prise du système minéral aux jeunes âges et de s'affranchir, entre autre, du mûrissement d'Ostwald qui se traduit par une augmentation de la taille des bulles et par suite en une augmentation du coefficient de conductivité thermique et une diminution des résistances mécaniques.

La stabilisation de la mousse minérale durcie ou du coulis de ciment obtenue grâce à la forte réactivité des liants hydrauliques LHA associés ou non à des sulfates de calcium selon l'invention permet, par comparaison à une amélioration de la stabilité de la mousse aqueuse ou de la mousse minérale obtenue par une sélection judicieuse de tensioactifs associés à des polymères ou autres agents stabilisateurs de mousses aqueuses bien connus de l'homme de l'art tels que les protéines, les polymères d'origine naturelle ou synthétiques, d'obtenir de manière fiable et robuste une mousse minérale durcie présentant un réseau de bulles fin et homogène conduisant après prise à un matériau thermo-isolant à structure cellulaire présentant une plus faible conductivité thermique tout en conservant de bonnes résistances mécaniques.

Par rapport aux mousses minérales de l'art antérieur comportant de grandes quantités de silicates, les mousses minérales durcies de l'invention ont une densité plus faible combinée avec une résistance mécanique élevée.

Selon une variante de l'invention, la porosité peut être apportée par la présence de charges creuses de faible densité dans le coulis de ciment, éventuellement en association avec une mousse aqueuse.

Les systèmes de l'invention présentent pour avantage supplémentaire non négligeable d'avoir une bonne résistance mécanique à court terme se traduisant notamment par des valeurs de résistance à la compression après 3 heures:

- Rc supérieures à 0,2 MPa, de préférence supérieures à 0,3 MPa, et mieux encore égales ou supérieures à 0,5 MPa pour les matériaux présentant des valeurs de lambda inférieures à 0,08 W/m°C
- Rc supérieures à 0,8 MPa, de préférence supérieures à 1 MPa et mieux encore supérieures à 1,5 MPa pour des valeurs de lambda allant de 0,08 à 0,2W/m°C.

Les systèmes de l'invention se caractérisent par des valeurs de résistance à la compression après 24 heures:

- Rc supérieures à 0,3 MPa, de préférence égales ou supérieures à 0,5 MPa pour les matériaux présentant des valeurs de lambda inférieures à 0,08 W/m°C
- Rc supérieures à 1 MPa de préférence supérieures à 1,5 MPa pour des valeurs de lambda allant de 0,08 à 0,2W/m°C.

Les matériaux thermo-isolants de l'invention se caractérisent également par une valeur de retrait inférieur à $500 \mu m/m$, de préférence inférieur à $400 \mu m/m$, avantageusement inférieur à $300 \mu m/m$ et encore plus préférentiellement inférieur à $200 \mu m/m$. Ce retrait est mesuré suivant la méthode enseignée par la norme NF EN 128 08-4.

Cette propriété confère aux matériaux de l'invention l'avantage d'une bonne adhérence aux parois pour le remplissage des éléments de construction creux et une meilleure stabilité dans le temps. Cette propriété est particulièrement importante lors de la mise en place in situ de la mousse : rénovation de bâtiments, réalisation de panneaux sandwiches, pour éviter la formation de ponts thermiques.

Enfin, les mousses minérales de l'invention ont également pour avantage de permettre de moduler le temps de prise. Ceci est avantageux par rapport aux mousses minérales comprenant essentiellement comme liant du ciment Portland qui ne développe pas intrinsèquement une aussi forte nucléation d'hydrates aux jeunes âges

Les mousses minérales à base de ciment Portland (sans système accélérateur) ont, en général, des temps de prise supérieurs à 2 heures.

Les mousses minérales et les coulis de ciment de l'invention peuvent avoir une ouvrabilité aussi faible que 5 minutes (prise flash) ou supérieure à 30 minutes. La mousse minérale de l'invention a donc une ouvrabilité qui est facilement ajustable à des valeurs comprises entre 5 à 30 minutes, voire à des valeurs supérieures à 30 minutes. Le fait que le temps de prise soit modulable est avantageux car pour la fabrication de préfabriqué, une prise rapide de 20 à 30 minutes est intéressante alors que pour des applications nécessitant la mise en place in situ de la mousse minérale, des temps de prise plus longs, supérieurs à 30 minutes voire supérieurs à 1h ou 2 heures, peuvent être avantageux. Ainsi on peut obtenir avec les liants hydrauliques LHA des ouvrabilités supérieures à une heure, voire à deux heures tout en conservant une cinétique d'acquisition de performances mécaniques rapide après la période d'ouvrabilité. Les hydrates de faibles tailles précipités pendant la période d'ouvrabilité viennent stabiliser la mousse minérale sans dégrader ses caractéristiques plastiques, ce qui est connu de l'homme de l'art.

Le compromis temps d'ouvrabilité/ acquisition des performances mécaniques peut être facilement ajusté en utilisant les systèmes d'adjuvants accélérateurs / retardateurs connus de l'homme de l'art et décrits ci après.

La suite de la description se réfère aux figures annexées qui représentent :

Figure 1, un schéma d'un dispositif pour la fabrication d'une mousse aqueuse ou d'une mousse minérale selon l'invention ;
Figures 2 a) à 2 c), une photographie d'un matériau thermo-isolant à structure cellulaire ou mousse minérale durcie selon l'invention (2a), d'un matériau à base de ciment Portland sans accélérateur de prise (2b) et avec accélérateur de prise (2c) ; et
Figures 3a et 3b des clichés de microscopie optique (x5) de coupes du matériau de la figure 2a.
Figures 4 à 10 représentent des clichés de microscopie optique (x5) de coupes des matériaux des exemples 3 à 7 et 9

Le matériau thermo-isolant à structure cellulaire ou mousse minérale durcie de l'invention présente en outre les caractéristiques suivantes seules ou en combinaison :

- il présente une porosité en volume comprise entre 70% et 95%, de préférence entre 80% et 95%.
- il présente une masse volumique égale ou inférieure à 500 Kg/m$^3$, de préférence égale ou inférieure à 300 Kg/m$^3$. Avantageusement, il a une masse volumique qui peut aller de 80 à 250 Kg/m$^3$.
- il présente une taille moyenne des cellules inférieure à 500$\mu$m, de préférence inférieure à 400$\mu$m, avantageusement inférieure à 300$\mu$m. Ces tailles de cellules ont été observées par microscopie optique de coupes de matériaux
- il présente une résistance à la compression Rc à 3 heures supérieure ou égale à 0,2 MPa, de préférence supérieure ou égale à 0,3 et mieux supérieure ou égale à 0,5 MPa,
- il présente une résistance au feu à 600°C, de préférence à 900°C et mieux à 1 200°C pendant trois heures.

De façon étonnante par rapport aux matériaux de type mousse minérale durcie de l'art antérieur, les matériaux thermo-isolants de l'invention peuvent avoir une porosité en volume élevée et une densité faible tout en conservant une très bonne résistance mécanique. La combinaison de ces propriétés est due au choix d'une composition de liant hydraulique alumineux particulière qui permet d'incorporer une quantité de bulles d'air élevée ou une quantité de charges creuses élevée tout en conservant un réseau minéral doté d'une forte cohésion.

- le liant hydraulique LHA peut comprendre en poids par rapport au poids total du liant hydraulique :

    - 10 à 90%, de préférence 10 à 70%, mieux 10 à 50% et encore mieux 20 à 40% en poids de sulfate de calcium.
    - le liant hydraulique LHA peut également comprendre 0 à 10 % en poids de ciment Portland, de préférence 0 à moins de 5% et mieux encore 2 à moins de 5% de ciment Portland.- le liant hydraulique peut également comprendre un ou plusieurs adjuvants inclus choisis parmi les agents moussants et les agents réticulants des mousses, les accélérateurs de prise, les retardateurs de prise, les agents modificateurs de rhéologie et agents rétenteurs d'eau, les dispersants et les superplastifiants, de préférence le ou lesdits adjuvants représentant jusqu'à 15% en poids, de préférence jusqu'à 10% et en général 5% ou moins du poids total du liant hydraulique.

En particulier les régulateurs de prise choisis parmi les accélérateurs de prise et les retardateurs de prise peuvent représenter de 0,05 à 15 % en poids, de préférence 0,1 à 10 % en poids par rapport au poids total du liant hydraulique.

- les charges ou fillers (fillers dont la granulométrie est par convention inférieure à 100 $\mu$m) sont en général choisies parmi la fumée de silice, le laitier de haut fourneau, le laitier d'aciérie, les cendres volantes, les fillers calcaires, le quartz broyé, les silices dont les silices de pyrogénation et de précipitation, les silices récupérées dans les écorces de riz, les silices de diatomées, les carbonates de calcium, les silicates de calcium, les sulfates de baryum, les métakaolins, les oxydes métalliques de titane, de fer, de zinc, de chrome, de zirconium, de magnésium, les différentes formes d'alumine (hydratée ou non), les billes creuses d'alumine, le nitrure de bore, le lithopone, le métaborate de baryum, les argiles calcinées, standards ou expansées, la perlite, la vermiculite, les ponces, la rhyolite, la chamotte, le talc, le mica, les billes de verre éventuellement creuses ou les granulés de verre expansés, les grains de mousse de silicate, les aérogels de silice, les sables, les gravillons, les graviers, les cailloux, le noir de carbonate, le carbure de silicium, le corindon, les granulés de caoutchouc, le bois, la paille.
- selon l'invention, les fillers (ou fines) sont des charges minérales dont les éléments sont de dimension inférieure à 100 microns.
- la mousse minérale durcie peut comprendre en outre un ou plusieurs autres composants tels que des adjuvants introduits lors de la préparation du liant ou de la mousse minérale, de préférence le ou lesdits adjuvants représentent jusqu'à 15% en poids, en général entre 3 et 10% du poids total du matériau. Ces adjuvants pouvant être choisis parmi les agents moussants et stabilisateurs de mousse, les accélérateurs de prise, les retardateurs de prise, les agents modificateurs de rhéologie et agents rétenteurs d'eau. Les dispersants ou superplastifiants.
- la mousse minérale durcie ou le coulis de ciment peut également contenir d'autres additifs tels que des agents hydrofugeants ainsi que des polymères thermoplastiques ou thermodurcissables introduits en tout ou en partie soit lors de la préparation du liant ou de la mousse minérale soit par pulvérisation ou imprégnation sur la mousse minérale durcie. Lorsqu'ils sont utilisés, ces additifs représentent généralement 0,5 à 25%, de préférence de 1 à 15% en poids du poids total du matériau thermo-isolant à structure cellulaire.
- la mousse minérale durcie ou le coulis de ciment selon l'invention peut comporter en outre des fibres ou des microfibres, par exemple de cellulose, d'alcool polyvinylique, de polyamide, de polyéthylène, de polypropylène, de silicone, des fibres métalliques et/ou de verre, des fibres d'origine naturelle telles que fibres de chanvre, fibres de coco, fibres de coton, fibres de bois ; présentant de préférence une longueur de 20 $\mu$m à 6 mm et un diamètre de 10 à 800 $\mu$m,
- ces fibres sont introduites dans la composition de liant ou dans la mousse minérale et peuvent être présentes jusqu'à 2 % en poids par rapport au poids du matériau thermo-isolant à structure cellulaire.

Les matériaux thermo-isolants à structure cellulaire de l'invention ont de préférence une masse volumique égale ou inférieure à 500 Kg/m$^3$, de préférence égale ou inférieure à 300 Kg/m$^3$. Avantageusement, ils ont une masse volumique qui peut aller de 80 à 250 Kg/m$^3$.

De préférence le matériau thermo-isolant de l'invention comporte de 1 à 40% de charges creuses de faible densité, avantageusement de 5 à 30% en poids par rapport au poids total du matériau thermo-isolant.

Selon une réalisation de l'invention, le matériau thermo-isolant à structure cellulaire a avantageusement la composition suivante en poids par rapport au poids total du matériau :

a) 50 à 96%, de préférence 70 à 96% et mieux 90 à 96 % d'un liant hydraulique LHA tel que défini ci-dessus comportant :

- 10 à 90%, de préférence 10 à 70%, mieux 10 à 50% et mieux encore 20 à 40% en poids de sulfate de calcium, et,

b) 1 à 40 % d'au moins un matériau choisi parmi les charges réactives,
c) 0,5 à 5 % d'un matériau choisi parmi les activateurs de charge réactive,
d) 0 à 2 %, de préférence 0 à 1 % de fibres ou de microfibres et
e) 0 à 15 % d'adjuvants choisis parmi les agents moussants et les agents stabilisateurs ou réticulants des mousses, les accélérateurs de prise, les retardateurs de prise, les agents modificateurs de rhéologie et agents rétenteurs d'eau, les dispersants et superplastifiants.

Selon une autre réalisation de l'invention, le matériau thermo-isolant à structure cellulaire a avantageusement la composition suivante en poids par rapport au poids total du matériau :

a) 50 à 96%, de préférence 70 à 96% et mieux 90 à 96 % d'un liant hydraulique LHA tel que défini ci-dessus comportant :

-   10 à 90%, de préférence 10 à 70%, mieux 10 à 50% et mieux encore 20 à 40% en poids de sulfate de calcium, et,

b) 1 à 80 %, préférentiellement 1 à 60%, avantageusement 1 à 40% d'au moins un matériau choisi parmi les charges creuses de faible densité,
c) 0 à 2 %, de préférence 0 à 1 % de fibres ou de microfibres et
d) 0 à 15 % d'adjuvants choisis parmi les agents moussants et les agents stabilisateurs ou réticulants des mousses, les accélérateurs de prise, les retardateurs de prise, les agents modificateurs de rhéologie et agents rétenteurs d'eau, les dispersants et superplastifiants.

Selon une réalisation de l'invention, le matériau thermo-isolant à structure cellulaire a avantageusement la composition suivante en poids par rapport au poids total du matériau :

a) 50 à 96%, de préférence 70 à 96% et mieux 90 à 96 % d'un liant hydraulique LHA tel que défini ci-dessus comportant :

-   10 à 90%, de préférence 10 à 70%, mieux 10 à 50% et mieux encore 20 à 40% en poids de sulfate de calcium, et,
-   0 à moins de 5 % en poids de ciment Portland,

b) 4 à 50 %, de préférence 4 à 30 % et mieux 4 à 10 % de filler,
c) 0 à 2 %, de préférence 0 à 1 % de fibres ou microfibres et
d) 0 à 15 % d'adjuvants choisis parmi les agents moussants et les agents stabilisateurs ou réticulants des mousses, les accélérateurs de prise, les retardateurs de prise, les agents modificateurs de rhéologie et agents rétenteurs d'eau, les dispersants et superplastifiants. Le matériau de l'invention peut avoir une structure cellulaire ouverte ou fermée, généralement à la fois ouverte et fermée.

L'invention concerne également la mousse minérale qui sert de précurseur à l'obtention du matériau thermo-isolant à structure cellulaire (mousse minérale durcie) suivant l'invention.
La mousse minérale suivant l'invention utilisée pour la fabrication du matériau thermo-isolant à structure cellulaire décrit ci-dessus peut présenter les caractéristiques suivantes seules ou en combinaison :

•   elle comprend :

-   au moins un liant hydraulique LHA tel que décrit ci-dessus comportant éventuellement du sulfate de calcium, et /ou éventuellement du ciment portland,
-   au moins une charge, de préférence un filler,
-   au moins un solvant aqueux et/ou non aqueux et
-   au moins un gaz tel que de l'air, du dioxyde de carbone ou de l'azote,

L'invention concerne également un coulis de ciment comportant des charges creuses qui sert de précurseur à l'obtention du matériau thermo-isolant à structure cellulaire (mousse minérale durcie) suivant l'invention.
Le coulis de ciment comportant des charges creuses suivant l'invention utilisé pour la fabrication du matériau thermo-isolant à structure cellulaire décrit ci-dessus peut présenter les caractéristiques suivantes seules ou en combinaison :

•   il comprend :

-   au moins un liant hydraulique LHA comportant éventuellement du sulfate de calcium, et /ou éventuellement du ciment portland,
-   au moins une charge creuse de faible densité,
-   au moins un solvant aqueux et/ou non aqueux.

Dans les coulis de ciment ou les mousses minérales de l'invention, la charge creuse de faible densité est introduite en quantités allant de 1 à 80%, de préférence 1 à 60%, avantageusement 1 à 40% encore mieux de 5 à 30% en poids par rapport au poids total de matière sèche du coulis de ciment ou de la mousse minérale.
Les compositions de mousse minérale et de coulis de ciment utilisées pour la mise en œuvre de la présente invention comprennent avantageusement :

Un liant hydraulique alumineux tel que défini ci-dessus.

De préférence le liant comprend 10 à 90% en poids, par rapport au poids total du liant, de sulfate de calcium.

Avantageusement, ces compositions de mousse minérale ou de coulis de ciment contiennent en outre au moins une charge choisie parmi les charges réactives. Elles peuvent également contenir des charges creuses de faible densité.

Par charge réactive, on entend au sens de la présente invention une charge, ou filler, qui participe à la réaction d'hydratation du liant hydraulique. Selon la présente invention, la catégorie de matériaux nommée « charges réactives » n'inclut pas le ciment Portland ni le silicate de calcium.

- de préférence, la composition de mousse minérale ou de coulis de ciment comporte, pour la préparation du matériau mousse minérale durcie de l'invention de 1 à 30% en poids, de préférence 1,5 à 15%, avantageusement de 2 à 10% ce pourcentage étant rapporté au poids total de matière sèche de la mousse minérale, d'au moins une charge choisie parmi les charges réactives.

Avantageusement, la composition de mousse minérale ou de coulis de ciment comporte, pour la préparation du matériau mousse minérale durcie de l'invention 0,5 à 5, en poids par rapport au poids total de la composition de mousse minérale d'au moins un composé activateur de charge(s) réactive(s).

Par activateur de charge réactive, on entend, au sens de la présente invention, un composé choisi parmi les sels de métaux alcalins et alcalino-terreux, notamment les carbonates et les sulfates de métaux alcalins et alcalino-terreux. Outre les charges réactives et les charges creuses de faible densité mentionnées ci-dessus, la composition de mousse minérale de l'invention peut contenir des charges, ou filler, chimiquement inertes. Avantageusement celles-ci représentent entre 10 et 70% en poids par rapport au poids de matière sèche de la mousse minérale ou de coulis de ciment.

Dans des réalisations particulières, le liant peut contenir éventuellement également par rapport au poids total du liant :

0 à moins de 5% de ciment Portland.

Le silicate de calcium est l'un des constituants du ciment Portland, il représente habituellement 40 à 60% en poids de la composition d'un ciment Portland.

Avantageusement, les liants de l'invention peuvent contenir de 0 à moins de 3%, encore mieux moins de 2 %, en poids de silicate de métal alcalin ou alcalino-terreux, ce constituant étant employé seul ou étant incorporé sous forme d'un apport de ciment Portland.

Ils peuvent contenir de 0 à moins de 5% en poids d'hydroxyde de calcium et d'oxyde de calcium, en % en poids cumulés de ces deux matériaux, par rapport au poids de mousse minérale ou de coulis de ciment.

Parmi les charges réactives, ou fillers réactifs, (fillers dont la granulométrie est par convention inférieure à 100 $\mu$m), utilisables dans les liants de l'invention, on peut citer en particulier : la fumée de silice, le laitier de haut fourneau, le laitier d'aciérie, les cendres volantes, les métakaolins, les silices dont les silices de pyrogénation et de précipitation, les silices récupérées dans les écorces de riz, les silices de diatomées, les différentes formes d'alumine (hydratée ou non), les billes creuses d'alumine, les argiles calcinées, standards ou expansées, les aérogels de silice, les pozzolanes. Parmi les matières chimiques qui peuvent être employées dans la présente invention comme charge réactive, certaines existent sous différentes granulométries. Parmi les granulométries existantes de ces matériaux, certaines correspondent à une structure inerte chimiquement. L'utilisation de charges réactives dans la présente invention est entendue comme étant d'un matériau sous une forme qui permet effectivement une participation de ce matériau à la réaction d'hydratation du liant hydraulique. Lorsqu'il est présent, le ciment Portland n'entre pas dans la catégorie des charges réactives.

De préférence les charges réactives utilisées dans l'invention ont un diamètre médian $D_{50}$ inférieur ou égal à 30 $\mu$m, avantageusement inférieur ou égal à 15 $\mu$m.

De préférence les charges réactives utilisées dans l'invention ont un diamètre médian $D_{90}$ inférieur ou égal à 80 $\mu$m, avantageusement inférieur ou égal à 35 $\mu$m.

Par diamètre médian $D_x$ inférieur ou égal à y $\mu$m on entend que x% des particules ont un diamètre inférieur à y $\mu$m. La mesure est effectuée à l'aide d'un granulomètre laser de type Malvern.

- les charges, ou fillers, (fillers dont la granulométrie est par convention inférieure à 100 $\mu$m) non réactifs sont en général choisis parmi les fillers calcaires, le quartz broyé, les carbonates de calcium, les sulfates de baryum, les oxydes métalliques de titane, de fer, de zinc, de chrome, de zirconium, de magnésium, le nitrure de bore, le lithopone, le métaborate de baryum, la perlite, la vermiculite, les ponces, la rhyolite, la chamotte, le talc, le mica, les billes de verre éventuellement creuses ou les granulés de verre expansés, les grains de mousse de silicate, les sables, les gravillons, les graviers, les cailloux, le noir de carbonate, le carbure de silicium, le corindon, les granulés de caoutchouc, le bois, la paille.

La composition de mousse minérale ou de coulis comportant des charges creuses se caractérise en outre en ce que :

- elle peut comprendre en outre de préférence un composé choisi parmi les agents tensio-actifs, les agents entraîneurs d'air et/ou les agents générateurs de gaz
- elle présente une ouvrabilité ajustable entre 5 et 30 minutes ou une ouvrabilité supérieure à 30 minutes,

  - le ou les solvants représentent 10 à 40 % en poids du poids total de la mousse minérale, de préférence 20 à 30% en poids,

- elle peut comporter en outre un ou plusieurs adjuvants choisis parmi les agents moussants et les agents stabilisateurs ou réticulants des mousses, les accélérateurs de prise, les retardateurs de prise, les agents modificateurs de rhéologie et agents rétenteurs d'eau, les dispersants et les superplastifiants
- elle peut également comporter d'autres additifs choisis parmi les agents hydrofugeants, les fibres, les polymères thermoplastiques ou thermodurcissables.

Une composition de mousse minérale convenant à l'invention a avantageusement la composition suivante, en poids par rapport au poids total de la mousse minérale :

- 50 à 80 %, de préférence 60 à 70% de liant hydraulique LHA10 à 40 %, de préférence 20 à 30% de solvant,
- 2 à 10 %, de préférence 2 à 5 % de filler, et éventuellement
- 0,1 à 15%, de préférence 3 à 10% d'un adjuvant choisi parmi les agents moussants et les agents stabilisateurs ou réticulants des mousses, les accélérateurs de prise, les retardateurs de prise, les agents modificateurs de rhéologie et agents rétenteurs d'eau, les dispersants et superplastifiants

dont, en particulier :

- 0,1 à 2 % d'agent moussant,
- 0,1 à 2 % d'agent réticulant,
- 0,1 à 2 % de dispersant,
- 0,1 à 10% d'accélérateurs ou de retardateurs de prises.

L'invention concerne également le procédé de préparation d'une mousse minérale telle que décrite ci-dessus. Les procédés et dispositifs permettant de préparer des mousses sont connus et décrits par exemple dans les brevets US2005/0126781 et US 4,731,389.

Le procédé de l'invention comprend les étapes suivantes :

a) préparation d'une mousse aqueuse à partir d'une composition comprenant au moins de l'eau et au moins un composé choisi parmi les agents moussants, les entraîneurs d'air, les agents générateurs de gaz,
b) préparation d'un coulis de ciment comprenant

- le mélange du liant avec un solvant et éventuellement au moins un composé choisi parmi les agents tensio-actifs, les entraîneurs d'air, les agents générateurs de gaz, ,

c) introduction d'une ou de plusieurs charges en tout ou partie dans la mousse aqueuse et/ou dans le coulis de ciment,
d) mélange de la mousse aqueuse et du coulis.

Selon un autre mode de réalisation, la mousse minérale peut être préparée selon un procédé de préparation comprenant les étapes suivantes :

a) préparation d'un coulis de ciment comprenant :
le mélange du liant avec un solvant et éventuellement au moins un composé choisi parmi les agents tensio-actifs, les entraîneurs d'air, les agents générateurs de gaz, ,
b) injection dans le coulis d'un gaz en maximisant la surface de contact entre le gaz et le coulis de ciment.
c) incorporation d'une ou de plusieurs charges en tout ou partie pendant/ou après l'étape a), ou pendant / ou après l'étape b).

Selon un autre mode de réalisation, le coulis de ciment comportant des charges creuses de l'invention peut être préparé selon un procédé de préparation comprenant les étapes suivantes :

a) préparation d'un coulis de ciment comprenant :

le mélange du liant LHA avec un solvant,

b) incorporation dans le coulis d'au moins une charge creuse de faible densité,
c) incorporation d'une ou de plusieurs charges en tout ou partie pendant/ou après l'étape a), ou pendant/ou après l'étape b).

Lorsqu'il est employé dans la préparation des mousses minérales ou des coulis de ciment comportant des charges creuses de l'invention, l'activateur de charge réactive peut être introduit dans le coulis de ciment ou avec les charges.
Dans les trois modes de réalisation décrits ci-dessus les adjuvants, tels qu'activateurs de prise et etc.., peuvent être introduits en tout ou partie dans le coulis ou dans la mousse ou après mélange de la mousse et du coulis.

La maximisation de la surface de contact entre le gaz et le coulis de ciment peut être obtenue, par exemple en utilisant un mélangeur statique. En outre, l'introduction en tout ou partie de la charge dans le coulis en même temps que le gaz accroît la surface de contact entre le gaz et le coulis.

Selon un autre mode de réalisation, la mousse minérale peut être générée sans addition de tensio-actifs par simple entraînement d'air lors de la préparation d'un coulis de ciment comprenant un liant hydraulique LHA, contenant éventuellement du sulfate de calcium, un solvant, et éventuellement des charges, lesquelles peuvent être introduites en tout ou en partie soit lors de la préparation du coulis, soit après cette étape.

Enfin, l'invention concerne l'utilisation de la mousse minérale ou de la mousse minérale durcie comme matériau thermo-isolant à structure cellulaire pour la réalisation d'isolants thermiques :

- pour réaliser des panneaux préfabriqués comprenant au moins une couche isolante à base de la mousse minérale ou mousse minérale durcie,
- pour combler les parties creuses des éléments de construction des bâtiments par la mise en place in situ de ladite mousse minérale tels que murs, plafonds, parpaings, portes, gaines,
- pour réaliser pour réaliser des planchers chauffants par mise en place in situ de la mousse au contact des sous faces des tuyaux
- pour réaliser en application extérieure une monocouche présentant une fonction isolante pour le revêtement des bâtiments par mise en place in situ de ladite mousse minérale.

Lorsque la mousse minérale durcie est utilisée pour préparer des matériaux destinés à ces applications (isolation thermique), un coefficient de conductivité thermique à 20°C inférieur ou égal à 0, 045 W/m.°C est particulièrement avantageux.

L'invention concerne également l'utilisation de la mousse minérale ou mousse minérale durcie dans des applications pour isolant réfractaire :

- pour la réalisation de briques réfractaires,
- pour réaliser des bétons monolithiques par mise en place in situ de ladite mousse minérale.

Lorsque la mousse minérale ou mousse minérale durcie est utilisée pour préparer des matériaux destinés à des applications pour isolants réfractaires, on renforce généralement la structure par des charges légères citées précédemment afin de limiter le retrait après cuisson et d'augmenter les résistances mécaniques.

En outre un coefficient de conductivité thermique à 20°C inférieur ou égal à 0,2 W/m°C et préférentiellement inférieur ou égal à 0,15 W/m°C est suffisant dans cette application.

De préférence, le liant de l'invention est un liant ettringitique. Par liant ettringitique, on entend un liant hydraulique dont les composants, lors de l'hydratation dans les conditions normales d'utilisation, donnent comme hydrate principal l'ettringite, qui est un trisulfoaluminate de calcium répondant à la formule $3CaO,Al_2O_3.3CaSO_4.32H_2O$. Les liants LHA contenant du sulfate de calcium conduisent par hydratation à la formation de l'ettringite. Par conséquent, le liant hydraulique LHA de l'invention comprend, de préférence 10 à 90% en poids de sulfate de calcium par rapport au poids total du liant hydraulique, de préférence 10 à 70 %, encore plus préférentiellement 10 à 50 %, et, de préférence 20 à 40%.

Le sulfate de calcium provient de composés d'origine naturelle, synthétique ou de traitement de sous produits choisis parmi les anhydrites, les semi-hydrates, les gypses et leurs mélanges. L'utilisation d'un liant hydraulique LHA comprenant des matériaux très réactifs permet d'obtenir des mousses minérales, des coulis de ciment et des matériaux thermo-isolants présentant un taux de liant très faible, par exemple inférieur à 20 % , de préférence inférieur à 10%, voire de 4% en poids par rapport au poids total de la composition.

Selon les applications, de préférence, les matériaux thermo-isolants à structure cellulaire suivant l'invention comprennent au plus 70% en poids de charges, mieux au plus 60% de charges.

Ainsi, les liants hydrauliques selon l'invention peuvent comprendre majoritairement un ciment alumineux et (ou) un ciment sulfo aluminate de calcium. Cependant, ils peuvent comprendre à titre de composant minoritaire du ciment Portland, de préférence dans une limite de 5% en poids par rapport au poids total du liant hydraulique.

Les matériaux de l'invention présentent également d'excellentes propriétés de résistance au feu. On observe que cette propriété est plus prononcée lorsque l'on utilise un liant ettringitique grâce à la quantité importante d'eau liée présente dans la structure moléculaire de l'ettringite.

De préférence, le liant hydraulique de l'invention comprend des additifs régulateurs de prise tels que des accélérateurs de prise ou des retardateurs de prise. Ils représentent de 0,1 à 15 % en poids, de préférence de 0,1 à 10 % en poids par rapport au poids total du liant hydraulique.

Les accélérateurs de prise utilisés dans la présente invention peuvent être de tout type connu. Leur utilisation permet de régler l'ouvrabilité de la mousse minérale ou du coulis de ciment. On peut citer, à titre d'exemples, l'aluminate de sodium, le silicate de sodium, l'aluminate de potassium, le sulfate d'aluminium, le carbonate de potassium, les sels de lithium tels que l'hydroxyde de lithium, le sulfate de lithium et le carbonate de lithium utilisables seuls ou en mélange

Les retardateurs de prise utilisés dans la présente invention peuvent être de tout type connus, on peut notamment citer, à titre d'exemples, l'acide citrique, l'acide tartrique, le gluconate, et l'acide borique et ses sels utilisables seuls ou en mélange.

Les agents rétenteurs d'eau et modificateurs de rhéologie peuvent être choisis parmi la famille des éthers de cellulose, éthers de guar, éthers d'amidon, les polymères associatifs, les polymères obtenus par biofermentation tels que les gommes xanthane, gommes wellan...

Afin de limiter les transferts d'humidité à l'intérieur de la mousse minérale durcie, transferts qui augmentent significativement le coefficient de conductivité thermique et diminuent par conséquent significativement l'efficacité de l'isolation thermique, il est intéressant d'incorporer un agent d'hydrofugation introduit tout ou en partie soit dans la masse de la mousse minérale ou le coulis de ciment lors de sa préparation, soit par imprégnation de la mousse minérale durcie. A titre d'agents d'hydrofugation on peut citer de manière non limitative :

- les huiles de silicones de type polydimethylsiloxane qui peuvent être fonctionnalisées ou non avec des groupes réactifs de type Si-H , Si (OMe), Si (OEt), les émulsions aqueuses de ces huiles telles que par exemple décrits dans le brevet US 5373079
- les organosilanes tels que les trialcoxysilanes et silazanes décrits dans le brevet US20050182174
- les siliconates tels que par exemple le methylsiliconate de potassium
- les paraffines, les cires de type stéarates, oléates, les huiles d'origine végétale et leurs dérivés tels que commercialisés par la société Novance.

Ces hydrofugeants pourront être utilisés en fonction de leur nature, soit purs, soit dilués dans un solvant soit en dispersion ou en émulsion dans l'eau.

Afin de renforcer les propriétés mécaniques de la mousse minérale durcie, il est intéressant d'introduire pendant la préparation de la mousse minérale ou du coulis de ciment des polymères tels que par exemple les alcools polyvinyliques, des polyamides, des latex sous forme liquide ou sous forme de poudre.

Par latex on entend une émulsion d'un ou de plusieurs polymères obtenus par polymérisation radicalaire de monomères éthyléniquement insaturés choisis parmi le styrène, les dérivés du styrène, l'éthylène, l'acétate de vinyle, le chlorure de vinyle , le chlorure de vinylidène , le vinyl propionate, le vinyl n-butyrate, le vinyl laurate, le vinyl pivalate et le vinyl stéarate, VEOVA° 9 à 11, le (méth)acrylamide, les (C1-C20)alkyl esters de l'acide méthacrylique , les (C2-C20) alcenyl esters de l'acide méthacrylique avec des alcanols à 1 à 12 atomes de C , tels les esters méthylique, éthylique, n-butylique, isobutylique, t-butylique et 2-éthylhexylique des acides acrylique et méthacrylique, les nitriles, les acrylonitriles, les diènes, tels que 1, 3-butadiène, l'isoprène, les monomères portant deux groupes vinyle, deux groupes vinylidène ou deux groupes alkylène.

On peut également envisager d'introduire certains polymères thermo durcissables, ou photoréticulables en tout ou en partie soit pendant la préparation de la mousse minérale ou du coulis de ciment, soit par pulvérisation ou imprégnation sur la mousse minérale durcie.

A titre de polymères thermodurcissables (qui réticulent sous l'effet de la chaleur ou d'une radiation) on peut citer par exemple et à titre non limitatif les polyuréthanes, les époxys, les polyesters.

Les charges utilisées selon l'invention sont en général des matériaux inertes utilisés comme agent de remplissage. Selon un mode de réalisation particulièrement avantageux, il est prévu d'employer dans la mousse minérale des charges réactives. Selon une autre variante avantageuse il est prévu d'employer dans la mousse minérale ou dans le coulis de ciment des charges creuses de faible densité. Les charges peuvent être minérales ou organiques. Les charges minérales peuvent être par exemple choisies parmi la fumée de silice, le laitier de haut fourneau, le laitier d'aciérie, les cendres volantes, les fillers calcaires, le quartz broyé, les silices dont les silices de pyrogénation et de précipitation, les silices récupérées dans les écorces de riz, les silices de diatomées, les carbonates de calcium, les sulfates de baryum, les métakaolins, les oxyde métallique de titane, de fer, de zinc, de chrome, de zirconium, de magnésium, les différentes formes d'alumine (hydratée ou non), les billes creuses d'alumine, le nitrure de bore, le lithopone, le métaborate de baryum, les argiles calcinées, standards ou expansées, la perlite, la vermiculite, les ponces, la rhyolite, la chamotte, le talc, le mica, les billes de verre éventuellement creuses ou les granulés de verre expansés, les aérogels de silice, les grains de mousse de silicate, les sables, les gravillons, les graviers et/ou les cailloux. Les charges organiques peuvent-être choisies dans le groupe constitué des billes polymériques organique (polytétrafluoroéthylène, polyéthylène, polypropylène, polystyrène, polychlorure de vinyle, polydiméthylsiloxane), des granulés de caoutchouc, le bois tel que la poudre de liège, la sciure de bois, la paille et/ou des billes de polystyrène.

On utilise de préférence des charges creuses de faible densité. De préférence, les charges ont une densité inférieure à la densité du mortier frais (qui est inférieure à 3). En général les charges creuses de faible densité ont une densité inférieure à 0,5, de préférence inférieure à 0,1, avantageusement inférieure à 0,05. La taille des charges creuses est de préférence comprise entre 10$\mu$m et 2,5mm. Des charges hydrophobes, par exemple de carbonate de calcium, sont préférentiellement utilisées. Les charges fines, c'est-à-dire les charges présentant un diamètre moyen D90 inférieur ou égal à 5 $\mu$m, de préférence inférieur à 1 $\mu$m renforcent la mousse minérale. De préférence, le matériau de l'invention comprend des charges de diamètre moyen (D90) inférieur ou égal à 5$\mu$m.

A titre de granulés en verre expansé, on peut citer les granulés commercialisés sous la marque Poraver® présentant une densité apparente fonction de la granulométrie apparente comprise entre 140 et 530 Kg/m$^3$. Par exemple, des granulés de granulométrie standard 4 - 8 mm ont une densité apparente de 180 kg/m$^3$ et des granulés de granulométrie 0,1 - 0,3 mm ont une densité de 400 kg/m$^3$. On peut également citer les granulés en verre expansé Liaver dont la granulométrie est comprise entre 0,25 et 4 mm ainsi que les grains de granulométrie plus élevée (0 - 72 mm) commercialisés sous le nom Misapor®.

A titre de billes de verre creuses, on peut citer les billes de verre commercialisées par les sociétés 3M, Potters PQ et Akzo Nobel Expancel, présentant une granulométrie comprise entre 20 $\mu$m et 110 $\mu$m et une densité d'environ 100 kg/m$^3$.

A titre de cénosphères, on peut utiliser les produits commercialisés par les sociétés Trelleborg Fillite, Potters PQ, Omega Minerais. Ces charges sont des cénosphères de granulométrie 0 - 0,5 mm dont la densité apparente est de 350 à 450 kg/m$^3$

A titre de grain de mousse de silicate, on peut citer les grains SLS®20 qui sont des grains très légers de nature hydrophobe.

A titre d'argile expansée, on utilise par exemple celles de granulométrie 0 - 4 mm et présentant une densité apparente d'environ 200 kg/m$^3$.

Les ponces ou pierres ponces sont des roches volcaniques très poreuses et d'une densité faible, fréquemment inférieure à 1. De préférence, les ponces ont une granulométrie 0,3 - 8 mm. Ce produit est commercialisé par la société Quick Mix.

Les argiles expansées utilisées selon l'invention ont, de préférence, une granulométrie comprise entre 1 et 8 mm et une densité apparente comprise entre 280 et 650 kg/m$^3$. Ces produits sont commercialisés par les sociétés Maxit Fibo et Liapor. On peut choisir des argiles expansées traitées en surface pour réduire la demande en eau.

Les schistes expansés utilisés selon l'invention ont, de préférence, une granulométrie comprise entre 2 et 8 mm. Ces produits sont commercialisés par la société Berwilit.

La perlite utilisée selon l'invention a, de préférence, une granulométrie comprise entre 0 et 6 mm et une densité apparente comprise entre 39 et 95 kg/m$^3$. Ce produit est commercialisé par exemple par les sociétés Knauf et Pavatex.

La vermiculite utilisée selon l'invention a, de préférence, une granulométrie comprise entre 0 et 2 mm et une densité apparente comprise entre 60 et 160 kg/m$^3$. Ce produit est commercialisé par exemple par les sociétés Isola-Mineralwolle Werke, CMMP et Reppel.

La rhyolite utilisée selon l'invention a, de préférence, une granulométrie comprise entre 10 et 350 $\mu$m et une densité apparente comprise entre 180 et 350 kg/m$^3$. Ce produit est commercialisé par exemple par la société Lafarge Noblite.

On peut également utiliser d'autres types d'adjuvants comme par exemple les agents rétenteurs d'eau et modificateurs de rhéologie qui peuvent être choisis parmi la famille des éthers de cellulose, éthers de guar, éthers d'amidon, les alcools polyvinyliques, les polyacrylamides, les polymères associatifs, les polymères obtenus par biofermentation tels que les gommes de xanthane, les gommes wellan, les silices pyrogénées, les silices de précipitation, les laponites, les bentonites,les hectorites...

On peut également utiliser des dispersants tels que par exemple les lignosulfonates, les naphtalène sulfonates, les mélamine sulfonates, les caséines, les polycarboxylates modifiés, les polymères comportant des motifs phosphonate, les phosphates et les phosphonates.

La mousse minérale ou le coulis de ciment comportant des charges creuses sont obtenus à partir d'un coulis de ciment. Le coulis de ciment peut être préparé extemporanément, c'est-à-dire juste avant emploi. Dans ce cas, on peut dans un premier temps mélanger les composants du liant hydraulique, les régulateurs de prise et éventuellement des charges et/ou d'autres additifs de façon à former un mélange poudreux, puis gâcher avec de l'eau ou un solvant le mélange ainsi obtenu pour former un coulis de ciment.

Il est également possible d'utiliser un coulis aqueux prêt à l'emploi, c'est-à-dire un coulis pré-préparé. Dans ce cas, les coulis doivent être stabilisés pour présenter une durée de vie élevée, c'est-à-dire d'au moins un mois, mieux de deux mois, de préférence 3 mois ou plus et mieux encore au moins 6 mois, afin de se garantir contre les délais de stockage ou de livraison.

On entend par « durée de vie » au sens de l'invention, la durée pendant laquelle un composant reste sous la forme d'une suspension aqueuse ou non aqueuse de produits solides, plus ou moins fluide, pouvant revenir à l'état de suspension aqueuse ou non aqueuse par une simple agitation mécanique, sans faire prise.

Le coulis en phase aqueuse doit être stabilisé (ou retardé) plusieurs mois. On peut utiliser par exemple à cette fin de l'acide borique ou l'un de ses sels en suspension dans l'eau. Il sera donc nécessaire pour pouvoir déclencher la prise de débloquer le ciment contenu dans le coulis avant utilisation. Pour cela, on utilise en général un matériau susceptible de « débloquer » le ciment alumineux retardé et éventuellement un catalyseur permettant d'accélérer la prise du ciment, par exemple, un mélange de chaux et d'hydroxyde de lithium. Les brevets EP 0241 230 et EP 0 113 593 divulguent des systèmes de ce type.

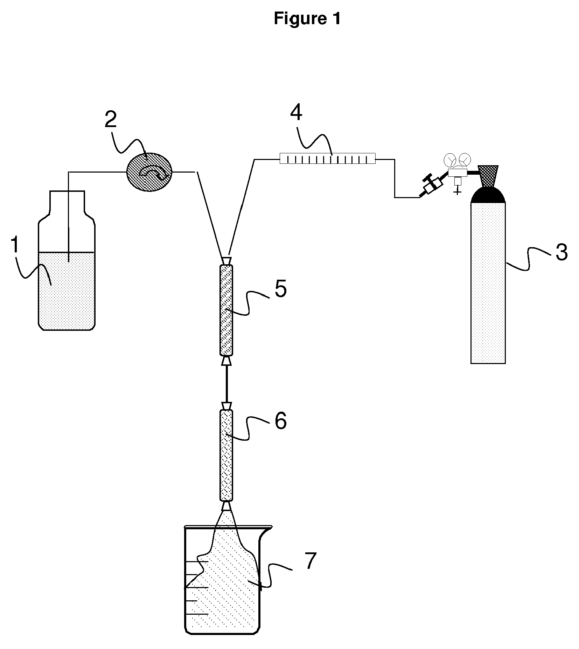

Pour obtenir la mousse minérale de l'invention, on peut mélanger le coulis de ciment décrit ci-dessus avec une mousse aqueuse comprenant au moins un composé choisi parmi les agents moussants, les entraîneurs d'air, les agents générateurs de gaz. On pourra utiliser un appareillage tel que représenté sur la figure 1 pour préparer la mousse aqueuse. Un mélange d'eau et d'agents moussants ou d'entraîneurs d'air 1 est pompé à l'aide d'une pompe doseuse 2 et est co-injecté avec un gaz 3 dans un mélangeur 5 par exemple un mélangeur statique (ou un tube rempli de billes). Le gaz pouvant être par exemple de l'air, de l'azote ou du dioxyde de carbone est prélevé à partir d'une source gazeuse 3. Le débit de gaz injecté est contrôlé à l'aide d'un débitmètre 4. Selon un autre mode de réalisation, le mélange de gaz et d'eau, d'agents moussants et/ou entraineurs d'air passe à travers plusieurs mélangeurs à billes 5 et 6 présentant des diamètres de billes de diamètres de plus en plus faibles. Enfin on récupère la mousse aqueuse dans un récipient 7.

Selon un autre mode de réalisation de l'invention, on ajoute directement au coulis de ciment au moins un composé choisi parmi les agents moussants, les entraîneurs d'air, les agents générateurs de gaz, puis on injecte dans ce coulis un gaz de façon à former la mousse minérale. L'injection de gaz est réalisée en maximisant la surface d'inter-raction entre le gaz et le coulis de manière à obtenir une mousse minérale abondante et stable. On pourra utiliser un appareillage tel que celui décrit dans la figure 1 en remplaçant le mélange d'eau et d'agents moussants ou d'entraîneurs d'air par le coulis de ciment additivé.

Selon un autre mode de réalisation, la mousse minérale peut être générée sans addition de tensio-actifs par entraînement d'air lors de la préparation d'un coulis de ciment comprenant un liant hydraulique LHA un solvant, des charges, de préférence des charges réactives ou des charges creuses de faible densité, ou par exemple des fillers, lesquelles peuvent être introduites en tout ou en partie soit lors de la préparation du coulis, soit après cette étape.

Selon un autre mode de réalisation, des charges creuses sont incorporées au coulis de ciment de façon à générer une porosité.

La mousse minérale ou le coulis de ciment ainsi obtenu peut être directement utilisé pour fabriquer un matériau thermo-isolant à structure cellulaire (ou mousse minérale durcie) selon l'invention. La mousse minérale ou le coulis de ciment ou la mousse minérale durcie suivant l'invention présente pour avantage de ne nécessiter aucun traitement thermique, notamment un traitement hydrothermal coûteux. Le matériau thermo-isolant à structure cellulaire de l'invention peut donc être obtenu sans traitement thermique ou hydrothermique.

Selon l'invention, n'importe quel agent moussant traditionnellement utilisé pour faire mousser du ciment convient tel que des tensio-actifs anioniques, non ioniques et leurs mélanges. On peut éventuellement ajouter un additif stabilisateur de mousse aqueuse. Les additifs stabilisateurs peuvent être soit des tensio-actifs, soit des polymères, des alcools à longue chaîne, sous forme liquide ou en particules solides tels que par exemple les alkanolamides, hydrocolloides, protéines cités dans les brevets WO/2008/020246, WO/2006/067064, US 4218490. La mousse de l'invention peut ne pas comporter d'agent moussant ni d'agents stabilisateurs de mousses.

Les agents entraîneurs d'air sont des composés qui permettent de stabiliser les bulles d'air piégées par les turbulences générées lors du mélange. A titre d'agent entraîneur d'air, on peut citer les résines naturelles de bois, les composés sulfatés ou sulfonatés, les détergents synthétiques et les acides gras organiques.

Les agents générateurs de gaz utilisés selon l'invention peuvent par exemple être choisis parmi les composés qui gênèrent de l'azote, de l'oxygène, de l'hydrogène, du dioxyde de carbone, du monoxyde de carbone, de l'ammoniac ou du méthane. Le brevet US2005/0126781 cite de nombreux agents générateurs de gaz, pouvant être utilisés selon l'invention. On peut citer à titre d'exemple les composés contenant des groupes hydrazine ou azo tels que l'hydrazine, l'azodicarbonamide, l'azobis (isobutyronitrile), le p-toluène sulfonyle hydrazide, le p-toluène sulfonyle semicarbazide, le carbohydrazide, le p-p'-oxybis (benzènesulfonylhydrazide) et leurs mélanges. Des exemples d'agents générant de l'azote ne contenant pas de groupe hydrazine ou azo incluent les sels d'ammonium d'acide organique ou inorganique, l'hydroxylamine sulfate, les carbamides et leurs mélanges. Des exemples d'agents générant de l'oxygène sont par exemple les agents de blanchiment classiquement utilisés en détergence tels que par exemple les peroxides, les percarbonates persulfates, peroxycarbonates. Le matériau (mousse minérale durcie) ou la mousse minérale ou le coulis de ciment comportant des charges creuses de l'invention sont particulièrement utiles pour améliorer l'isolation thermique et la résistance au feu des bâtiments. En effet, le matériau (mousse minérale durcie) ou la mousse minérale ou le coulis de ciment peuvent être utilisés pour réaliser des panneaux préfabriqués comprenant au moins une couche isolante à base du matériau (mousse minérale durcie) tels que :

- réalisation de panneaux pour substituer les panneaux de polystyrène utilisés dans les systèmes d'isolation thermique par l'extérieur,
- réalisation de panneaux sandwiches, dans lesquels la mousse minérale, ou le coulis de ciment comportant des charges creuses, est introduit entre deux parois de matériau de construction (bois, contreplaqué, polystyrène, plâtre, béton).- réalisation de pré murs isolants porteurs ou non porteurs ou parpaings et briques destinés à la construction,
- réalisation de panneaux pour substitution des panneaux sandwich à intérieur fibres de verre ou PU utilisés pour l'isolation thermique intérieure de la maison.

Le matériau (mousse minérale durcie) ou la mousse minérale ou le coulis de ciment comportant des charges creuses peuvent également être utilisés pour mettre en place in situ de la mousse minérale pour combler les parties creuses des éléments de construction des bâtiments, tels que murs, plafonds, parpaings, portes, gaines...

Le matériau ou la mousse minérale peuvent également être utilisés pour mettre en place in situ de la mousse minérale en sous-face au contact des tuyaux utilisés dans le cadre de planchers chauffants.

Le matériau ou la mousse minérale ou le coulis de ciment comportant des charges creuses peuvent également être utilisés pour mettre en place in situ de la mousse minérale en application extérieure comme monocouche présentant une fonction isolante pour le revêtement des bâtiments, cette monocouche pouvant être recouverte d'une couche de finition esthétique.

Le matériau, ou la mousse minérale de l'invention, ou le coulis de ciment comportant des charges creuses est également particulièrement utile pour réaliser des bétons ou briques isolantes pour applications réfractaires incluant la réalisation de briques réfractaires et la mise en place in situ de la mousse minérale pour la réalisation de bétons monolithiques.

Enfin, la mousse minérale ou le coulis de ciment comportant des charges creuses de l'invention peut être utilisée comme un béton prêt à l'emploi permettant d'obtenir un matériau thermo isolant utilisé dans les applications suivantes :

- les structures, poteaux, refends et dalles en blocs monomur permettant ainsi la réduction des ponts thermiques aux jonctions,
- les voiles bétons extérieurs permettant la réduction des ponts thermiques entre les étages d'immeubles,
- les dalles sur terre plein,
- le remplissage des doubles murs,
- l'isolation des toitures et terrasses.

**Exemples**

I - Détermination des protocoles

I. 1 - Détermination de la conductivité thermique et du retrait thermique.

- Mesure de la conductivité thermique, λ à 20°C.

Les conductivités thermiques ont été mesurées selon la norme EN 12667:2001 "Performance thermique des matériaux et produits pour le bâtiment. Détermination de la résistance thermique par la méthode de la plaque chaude gardée et la méthode flux métrique. Produit de haute et moyenne résistance thermique".

I.2 - Détermination de la résistance en compression.

La résistance en compression est déterminée selon la norme EN 196-1 sur des cubes 100x100x100 mm au bout de 3 et 24 heures.

I.3 - Détermination de la porosité ouverte d'un béton selon la norme : EN 993-1.

I.3.1 - Appareillage

- Balance à 0,1g équipée d'une fixation pour le panier recevant l'échantillon
- Cloche à vide
- Pompe à vide avec manomètre
- Bonbonne d'eau à 20°C
- Seau d'eau à 20°C

I.3.2 - Mode opératoire

- Sécher l'échantillon à l'étuve 60°C (génie civil) ou 110°C (réfractaire) pendant 24h
- Peser l'échantillon sec (P1)
- Placer l'échantillon dans la cloche à vide
- Faire le vide et vérifier le manomètre (< 50 mBar)
- En maintenant l'aspiration, introduire lentement de l'eau dans la cloche à vide jusqu'à recouvrir l'échantillon de 2 cm d'eau (submerger l'échantillon sous vide)
- Maintenir l'aspiration jusqu'à la fin de l'ébullition de l'eau (=>chasser l'air des pores)
- Fermer le robinet de la cloche à vide et arrêter la pompe
- Laisser l'imprégnation sous vide se poursuivre pendant un minimum de 3 heures (temps du dégazage de l'échantillon)
- Ramener la cloche à la pression atmosphérique
- Sortir l'échantillon à tester et éliminer l'excès d'eau à l'aide d'une éponge humide (ne pas sécher l'échantillon)
- Peser l'échantillon saturé d'eau (P2)
- Tarer la balance avec l'échantillon saturé d'eau sur le plateau
- Placer l'échantillon dans le panier métallique suspendu sous la balance
- Immerger l'ensemble dans un seau sous environ 10 cm d'eau
- Lire la masse (P3), qui permet de mesurer le poids d'eau déplacé et donc le volume de l'échantillon (mesure de la poussée d'Archimède sur l'éprouvette saturée d'eau)

$$\text{POROSITE (\%)} = (\text{Poids Saturé d'eau - Poids sec}) / \text{Volume x 100}$$

$$\text{POROSITE (\%)} = (P2 - P1)/P3 *100$$

I-4 : Détermination de la densité absolue et de la porosité ouverte par la méthode du picnomètre

I-4-1 : Appareillage

- Picnomètre Microméritics ACCUPYC II 1340.
- Balance de précision type Mettler +/- 0.0001g.
- Bouteille + détendeur Hélium (99.995% mini) 1.5 bars (21.5psi)

I-4-2 : Gamme de validité - Précision

- Gamme de mesure : > 0,2g / $cm^3$
- Précision de mesure : 0.05%

I-4-3 : Mode opératoire

*Préparation d'échantillon :*

L'échantillon doit être mis en étuve à 60°C (mini 2h) puis refroidi pour être exempt d'eau pour stabiliser plus rapidement la mesure (5 mesures successives identiques).
Tarer la cellule porte échantillon et la remplir au 2/3, relever la masse exacte. Introduire la cellule dans le pycnomètre et refermer le couvercle.
Lancer le cycle de mesure à l'ordinateur.

*Expression des résultats :*

Détermination de la densité absolue d'un solide (g/cm$^3$), à partir de la mesure du volume occupé par une masse connue de matière dans la cellule.
Le résultat correspond à la moyenne des cinq derniers résultats compris dans l'intervalle de confiance de l'appareil (0.02% de variation du volume).
Les résultats calculés par l'ordinateur à 0,01 g / cm$^3$ près expriment la valeur.

$$\text{POROSITE (\%)} = 1-(1/\text{densité apparente mesurée} - 1/\text{densité absolue}) \times 100$$

I-5 : Mesure des diamètres des pores par microscopie optique

La mousse minérale durcie est imprégnée par une résine durcissable (résine époxy) afin d'être observée sous microscopie optique. Après 12h de durcissement, l'échantillon est découpé transversalement en plaques d'environ 4 cm* 4cm d'épaisseur comprise entre 0,05 et 3 mm. L'observation de la surface transversale des échantillons est réalisée sous grossissement X5.

II - Exemples de compositions suivant l'invention et évaluation de la conductivité thermique et de la résistance en compression des matériaux isolants de l'invention

II. A. Exemple 1 :

II. A. 1 - Préparation des liants

Les composants suivants ont été ajoutés dans un récipient :

| Composant | Liant selon l'invention L1 |
|---|---|
| **Liant hydraulique** : | |
| Aluminate de calcium de la société TMC | 70 g |
| Gypse | 30 g |
| Carbonate de lithium | **0,05 g\*** |
| Acide citrique | **0,18 g\*** |
| **Dispersant** : | |
| Mighty 21 PZ® (Polycarboxylate éther poudre) | 0,22 g |
| Ether de cellulose | 0,1 g |
| **Microfibres de cellulose :** | |
| Arbocel® 40 (CFF) longueur 0,45-1 µm. | 0,5 g |
| **Charge** : | |
| fumée de silice Rw Q1 Fuller | 5 g |
| **Eau** : | 22,5 g |
| **Agent réticulant** : LithoFoam® NWFS | 1,5 g |

Les composants sont mélangés à l'aide d'un batteur électrique 30 secondes à faible vitesse (graduation 1) puis 1 minute 30 secondes à grande vitesse (graduation 5). On obtient ainsi un coulis de ciment.

II. A. 2 - Génération de la mousse aqueuse

Mélange dans un bol des produits suivants :

- 6 g d'agent moussant Lithofoam® SL400-L (protéine de 20000 à 120000 Daltons),

- 0,40 g : éther de cellulose,

- 80 g d'eau.

A l'aide du batteur électrique, on mélange à grande vitesse durant 5 minutes jusqu'à l'obtention d'une mousse aqueuse homogène et compacte.

II. A. 3 - Préparation de la mousse minérale

On incorpore 20 grammes de mousse aqueuse dans le coulis de ciment préparé ci-dessus à l'aide du batteur électrique pendant 3 minutes à vitesse moyenne (graduation 3).

II. A. 4 - Coulage et séchage de la mousse minérale

La mousse minérale est coulée dans des moules de dimensions 4 cm*4 cm*16 cm préalablement lubrifiés avec une huile de démoulage.

II. A. 5 - Composition de la mousse minérale

| Composition | Quantités (parties en poids) | % (en poids) |
|---|---|---|
| Liant | 94,5 | 66,8% |
| Eau | 38,6 (21,2 + 17,4) | 27,3% |
| Agent moussant | 1,3 | 0,9% |
| Agent réticulant | 1,4 | 1% |
| Charges | 5,2 | 3,7% |
| Autres additifs | 0,4 (0,3 + 0,1) | 0,3 % |

II. A. 6 - Caractérisation du matériau isolant obtenu

- Densité : 125 Kg/m$^3$,

- Résistance à la compression à 3 heures : Rc = 0,3 MPa

- Coefficient de conductivité thermique : $\lambda$ = 0,044 W/m.°C

- Absence de défauts dus à la maturation d'Oswald

- Porosité >90%.

II. B. Exemple 2 : Comparaison du matériau isolant de l'invention à un matériau isolant à base de ciment portland 52,5 R

II B..1 - Préparation des liants

Les composants suivants ont été ajoutés dans un récipient :

| Composant | Liant selon l'invention L2 | Liant 1 Comparatif LC1 | Liant 2 Comparatif LC2 |
|---|---|---|---|
| **Liant hydraulique** : | | | |
| Ciment portland 52,5R (Lafarge Le Havre) | 4,76 g | 100 g | 100 g |
| Aluminate de calcium Ternal RG ® (Kerneos) | 66,67 g | - | - |
| Anhydrite | 28,7 g | - | - |
| Carbonate de lithium | 0,05 g | - | - |
| Carbonate de sodium | - | - | 0,4 g |
| Acide citrique | 0,18 g | - | - |
| **Dispersant** : | | | |
| Mighty® 21 PZ (Polycarboxylate éther poudre) | 0,2g | 0,2 g | 0,2 g |
| **Microfibres de cellulose :** | | | |
| Arbocel® 40 (CFF) longueur 0,45-1 $\mu$m. | 0,2 g | 0,2 g | 0,2 g |
| **Charges** : | | | |
| fumée de silice Rw Q1 Fuller | 5 g | 5 g | 5 g |
| **Eau** : | 22,5 g | 22,5 g | 22,5 g |
| **Agent de cure de la mousse** : Lithofoam® NWFS (solution ≈ 30% extrait sec) | 1,5 g | 1,5 g | 1,5 g |

Les composants sont mélangés à l'aide d'un batteur électrique 30 secondes à faible vitesse (graduation 1) puis 1 minute 30 secondes à grande vitesse (graduation 5).

II. B.2 - Génération de la mousse aqueuse

Mélange dans un bol des produits suivants :

- 5g d'agent moussant Lithofoam® SL400-L (protéine de 20000 à 120000 Daltons)

- 80g d'eau

A l'aide du batteur électrique, on mélange à grande vitesse durant 5 minutes jusqu'à l'obtention d'une mousse aqueuse homogène et compacte.

II. B.3 - Préparation de la mousse minérale

On incorpore 20 grammes de mousse aqueuse dans 100 grammes de liant à l'aide du batteur électrique pendant 3 minutes à vitesse moyenne (graduation 3).
La mousse minérale de l'invention est facile à obtenir car la mousse aqueuse s'incorpore facilement dans la phase liante et l'ensemble est homogène.
La mousse minérale de l'essai comparatif 2 a été difficile à obtenir car le liant n'était pas assez fluide.

II.B.4 - Coulage et séchage de la mousse minérale

La mousse minérale est coulée dans des moules de dimensions 4 cm*4 cm*16 cm préalablement lubrifiés avec une huile de démoulage.

Les mousses minérales sont ensuite séchées à 23°C et 60% HR pendant 24H afin d'obtenir le matériau thermo-isolant à structure cellulaire selon l'invention.

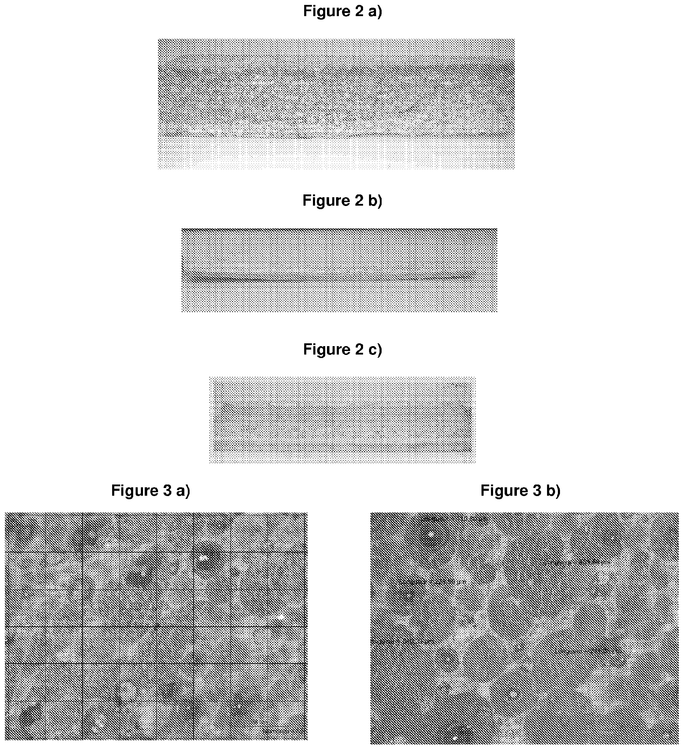

On constate que la mousse minérale majoritairement à base de Portland obtenu avec le liant comparatif LC1 s'effondre (figure 2b) contrairement à la mousse minérale de l'invention majoritairement à base de ciment alumineux L2 qui ne s'effondre pas (figure 2a). La figure 2 c) représente le matériau isolant majoritairement à base de ciment Portland LC2. On observe un moindre effondrement mais une grande inhomogénéité au sein du matériau thermo- isolant à structure cellulaire obtenu.

II. B.5 - Caractérisation du matériau thermo- isolant à structure cellulaire de l'invention. Mesure du volume poreux et de la densité :

La densité du matériau thermo- isolant à structure cellulaire est mesurée à l'aide d'un pycnomètre, cette mesure est comparée au résultat obtenu par porosimétrie sous eau. On mesure par ces deux techniques une densité de 0,29 et un volume poreux de 85% pour le matériau isolant de l'invention comprenant un liant à base de ciment alumineux, de sulfate de calcium et de ciment Portland.

Mesure des diamètres de pores du matériau isolant :
La mousse minérale durcie est imprégnée par une résine durcissable (résine époxy) afin d'être observée sous microscopie optique. Après 12h de durcissement, l'échantillon est découpé transversalement en plaques d'environ 4 cm* 4cm* d'épaisseur comprise entre 0,05 et 3 mm.

L'observation de la surface transversale des échantillons est réalisée sous grossissement X5 et est illustrée sur les figures 3 a) et 3 b).
Comme le montrent les figures 2a à 2c, la mousse minérale durcie selon l'invention (L2, figure 2a) présente une excellente tenue mécanique, cependant que les mousses minérales durcies à base uniquement de ciment portland, (LC1, figure 2b et LC2, figure 3b) se sont effondrées lors de la mise en contact de la mousse aqueuse avec le coulis.

La mousse minérale durcie selon l'invention (L2, figure 3a) comprend des bulles régulièrement réparties, 4 à 5 bulles par mm$^2$ et de taille régulière, cependant que la mousse minérale durcie de l'exemple comparatif LC1 (figure 3b) présente une hétérogénéité dans la taille et la répartition des bulles.

II. C. Exemple 3 : liants ettringitiques avec charges creuses et comparaison avec matériau à base de ciment Portland 52,5R

II. C. 1 - Préparation des liants

Les composants suivants ont été ajoutés dans un récipient :

| Composant | Liant selon l'invention L3 avec charges creuses et réactives | Comparatif/ Liant 1 LC3 sans charges creuses | Liant 100% OPC comparatif / Liant 1 LC4 |
|---|---|---|---|
| **Liant hydraulique** : Ciment portland 52,5R (Lafarge Le Havre) | 7,15 g | 7,15 g | 100 g |
| Aluminate de calcium Secar 51 ® (Kerneos) | 35,75 g | 35,75 g | - |
| Anhydrite | 12,5 g | 12,5 g | - |
| Carbonate de sodium | | | 0,4 g |
| Acide citrique | 0,1 g | 0,1 g | 0,1 g |
| **Charge creuse** Thermosilit® (*) | 11,0 g | - | - |
| **Charges réactives** : fumée de silice Rw Q1 Fuller | 5,03 g | 5,03 g | 5,03 g |

(suite)

| Dispersant :<br>Conpac 500 | 0,36 g | 0,36 g | 0,36 g |
|---|---|---|---|
| Ether de cellulose:<br>Tylose H300P2 | 0,11 g | 0,11 g | 0,11 g |
| Résine<br>Vinnapass 5011 L | 3 g | 3 g | 3 g |
| Charges:<br>Durcal 2 | 25 g | 25 g | 25 g |
| Sable Palvadeau 0-0,315 mm | - | 11 g | 11 g |
| Eau de gâchage | 30 g | 22 g | 22 g |
| (*) Le Thermosilit ® est une charge creuse de type perlite expansée qui présente les caractéristiques suivantes :<br>Granulométrie : 0 - 2,5 mm<br>Masse volumique : 80 - 100 kg/m$^3$ | | | |

Les composants sont mélangés à l'aide d'un batteur électrique 30 secondes à faible vitesse (graduation 1) puis 1 minute 30 secondes à grande vitesse (graduation 5). On obtient ainsi un coulis de ciment.

II. C. 2 - Génération de la mousse aqueuse

Mélange dans un bol des produits suivants :

- 4 g d'agent moussant Empicol ESC/3L (Sodium Laureth ether sulfate),

- 0,1 g : Gomme de Xanthane,

- 0,1 g de sulfate de lithium,

- 92,8 g d'eau

A l'aide du batteur électrique, on mélange à grande vitesse durant 5 minutes jusqu'à l'obtention d'une mousse aqueuse homogène et compacte de densité 50 kg.m$^3$.

II. C. 3 - Préparation de la mousse minérale

On incorpore 30 grammes de mousse aqueuse dans 100g de coulis de ciment préparé ci-dessus à l'aide du batteur électrique pendant 3 minutes à vitesse moyenne (graduation 3).

II. C. 4 - Coulage et séchage de la mousse minérale

La mousse minérale est coulée dans des moules de dimensions 4 cm*4 cm*16 cm ou 10 cm *10 cm *10 cm en polystyrène.
Les mousses minérales sont ensuite séchées à 23°C et 60% HR pendant 24H afin d'obtenir le matériau thermo-isolant à structure cellulaire selon l'invention.
On constate que la mousse minérale majoritairement à base de Portland obtenue avec le liant comparatif LC3 s'effondre contrairement à la mousse minérale de l'invention majoritairement à base de ciment alumineux L3 avec charges réactives et charges creuses qui ne s'effondre pas

II. C. 5 - Composition de la mousse minérale (Liant L3 avec charges réactives et charges creuses)

| Composition | L3 % (en poids) |
|---|---|
| Liant | 32,78 |
| Charge creuse | 6,51 |
| Charge réactive | 2,98 |
| Charge | 14,79 |
| Eau | 39,75 |
| Agent moussant | 0,30 |
| Autres additifs | 3,19 |

II. C. 6 - Caractérisation du matériau isolant obtenu

- Densité : 194 Kg/m$^3$,
- Porosité : 91%
- Résistance à la compression à 3heures : 0,5MPa, à 24 heures : Rc = 0,8 MPa
- Coefficient de conductivité thermique : $\lambda$ = 0,07 W/m.°C

La mousse minérale de l'essai comparatif avec ciment Portland LC4 n'a pu être obtenue du fait de l'effondrement de la mousse minérale. Les causes de cet effondrement sont dues à la faible réactivité de ce système.

Mesure des diamètres de pores du matériau isolant :

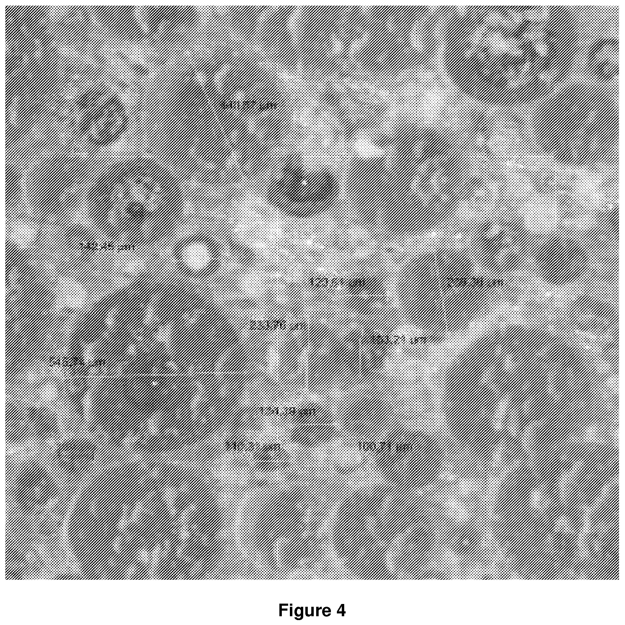

Sur la figure 4 on observe des pores de taille allant de environ 100 à 550 $\mu$m.

II. D. Exemple 4 : faible taux de liant, sans OPC, avec charge réactive et charge creuse

II. D. 1 - Préparation des liants

Les composants suivants ont été ajoutés dans un récipient :

| Composant | Liant ettringitique avec charges creuses et réactives L4 | Liant 100% OPC comparatif /Liant ettringitique LC5 |
|---|---|---|
| **Liant hydraulique** : | | |
| Ciment portland 52,5R (Lafarge Le Havre) | - | 13,3 g |
| Aluminate de calcium Secar 51 ® (Kerneos) | 9,1 g | - |
| Anhydrite Francis Flower | 3,51 g | - |
| Semi-hydrate Prestia Creation | 0,39 g | |
| Chaux aérienne | 0,3 g | 0,3 g |
| **Charge creuse** Aérogel de silice Isogel® | 5,0 g | 5,0 g |
| **Charges réactives** : | | |
| Laitier (*) | 5g | 5 g |
| fumée de silice Rw Q1 Fuller | 5g | 5 g |
| **Dispersant** : Compac 500 | 0,36 g | 0,36 g |
| **Ether de cellulose:** Tylose MH15003P6 | 0,10 g | 0,11 g |

(suite)

| Charges: | | |
|---|---|---|
| Durcal 130 | 33 g | 25 g |
| Sable Sifraco BR36 | 37,5 g | 11 g |

(*) Les caractéristiques du laitier utilisé dans tous les exemples sont les suivantes: Surface spécifique Blaine : 2900cm$^2$/g
Masse volumique absolue : 2,913 g/cm$^3$
Granulométrie ($\mu$m) :

| | |
|---|---|
| D10 | 3,49 |
| D20 | 5,60 |
| D50 | 12,65 |
| D80 | 24,76 |
| D90 | 33,22 |

Les composants sont mélangés à l'aide d'un batteur électrique 30 secondes à faible vitesse (graduation 1) puis 3 minute 30 secondes à grande vitesse (graduation 5). On obtient ainsi une mousse minérale.

II. D. 2 - Génération de la mousse aqueuse

Mélange dans un bol des produits suivants :

- 4 g d'agent moussant Empicol ESC/3L (Sodium Laureth ether sulfate),
- 0,1 g : Gomme de Xanthane,
- 0,1 g de sulfate de lithium,
- 92,8 g d'eau

A l'aide du batteur électrique, on mélange à grande vitesse durant 5 minutes jusqu'à l'obtention d'une mousse aqueuse homogène et compacte de densité 50 kg.m$^3$.

II. D. 3 - Préparation de la mousse minérale

On incorpore 15 grammes de mousse aqueuse dans 100g de coulis de ciment préparé ci-dessus à l'aide du batteur électrique pendant 3 minutes à vitesse moyenne (graduation 3).

II D.4 - Composition de la mousse minérale

| Composition | % (en poids) |
|---|---|
| Liant L3 | 9,27 |
| Charge creuse | 3,56 |
| Charge réactive | 7,13 |
| Charge | 50,88 |
| Eau | 28,12 |
| Agent moussant | 0,52 |
| Autres additifs | 0,63 |

II. D.4- Caractérisation du matériau isolant obtenu

- Densité : 232 Kg/m$^3$,
- Résistance à la compression à 3 heures : Rc = 0,2 MPa
- Coefficient de conductivité thermique : $\lambda$ = 0,0712 W/m.°C
- Porosité : 86%

La mousse minérale de l'essai comparatif LC5 avec ciment Portland n'a pu être obtenue du fait de l'effondrement de la mousse minérale. Les causes de cet effondrement sont dues à la faible réactivité de ce système.
Mesure des diamètres de pores du matériau isolant :

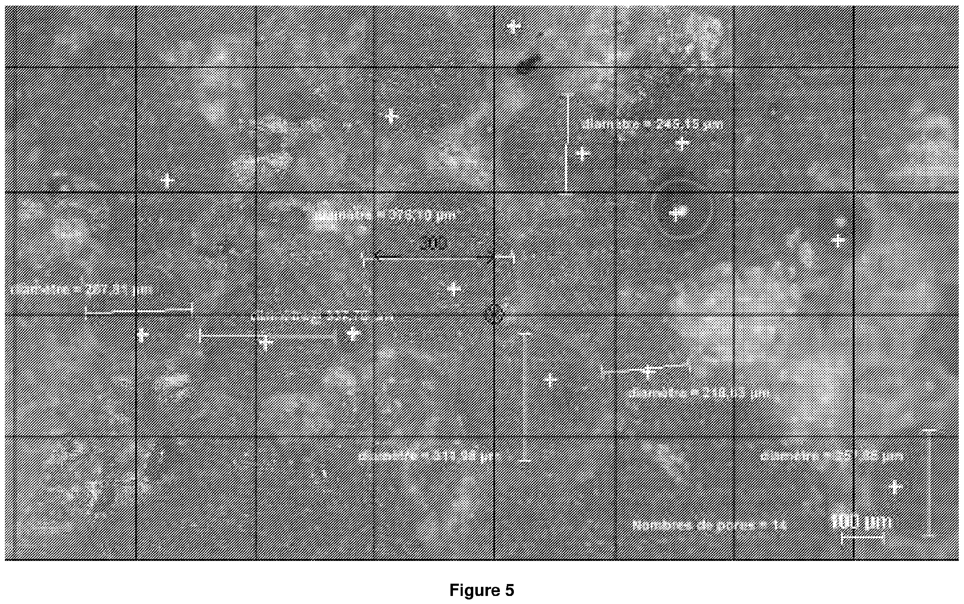

Sur la figure 5, on observe essentiellement des pores de taille inférieure à 300$\mu$M

II. E. Exemple 5 : Génération de mousse in situ dans le coulis avec charge réactive et charge creuse

II. E. 1 - Préparation des liants

Les composants suivants ont été ajoutés dans un récipient :

| Composant | Liant ettringitique avec charges creuses et réactives L5 |
|---|---|
| **Liant hydraulique** : | |
| Ciment portland 52,5R (Lafarge Le Havre) | - |
| Aluminate de calcium Secar 51 ® (Kerneos) | 7 g |
| Anhydrite Francis Flower | 2,7 g |
| Semi-hydrate Prestia Creation | 0,3 g |
| Chaux aérienne | 0,3 g |
| **Charge creuse** Thermosilit® | 20,0 g |
| **Charges réactives** : Laitier (*) | 5 g |
| fumée de silice Rw Q1 Fuller | 5 g |
| **Dispersant** : Conpac 500 | 0,36 g |
| **Ether de cellulose:** Tylose H300P2 | 0,08 g |
| **Charges:** Durcal 130 | 26 g |
| Sable Sifraco BR36 | 30,5 g |
| **Système Moussant** : Empicol ESC/3L | 1 g |
| Sulfate de Lithium | 0,1g |
| Gomme de Xanthane | 0,015 |
| **Eau de gâchage** | 40 g |
| (*) cf exemple 4 | |

Les composants sont mélangés à l'aide d'un batteur électrique 30 secondes à faible vitesse (graduation 1) puis 3 minute 30 secondes à grande vitesse (graduation 5). On obtient ainsi une mousse minérale.

II.E.2 - Coulage et séchage de la mousse minérale

Même procédé que II.D.2.

II. E. 3 - Composition de la mousse minérale

| Composition | % (en poids) |
|---|---|
| Liant | 7,23 |
| Charge creuse | 14,46 |
| Charge réactive | 7,23 |
| Charge | 40,84 |
| Eau | 28,91 |
| Agent moussant | 0,72 |
| Autres additifs | 0,56 |

II. E. 4- Caractérisation du matériau isolant obtenu

- Densité : 287 Kg/m$^3$,

- Résistance à la compression à 3 heures : Rc < 0,2 MPa, à 24 heures : Rc= 0,2 MPa

- Coefficient de conductivité thermique : $\lambda$ = 0,0821W/m.°C

- Porosité : 88,5%

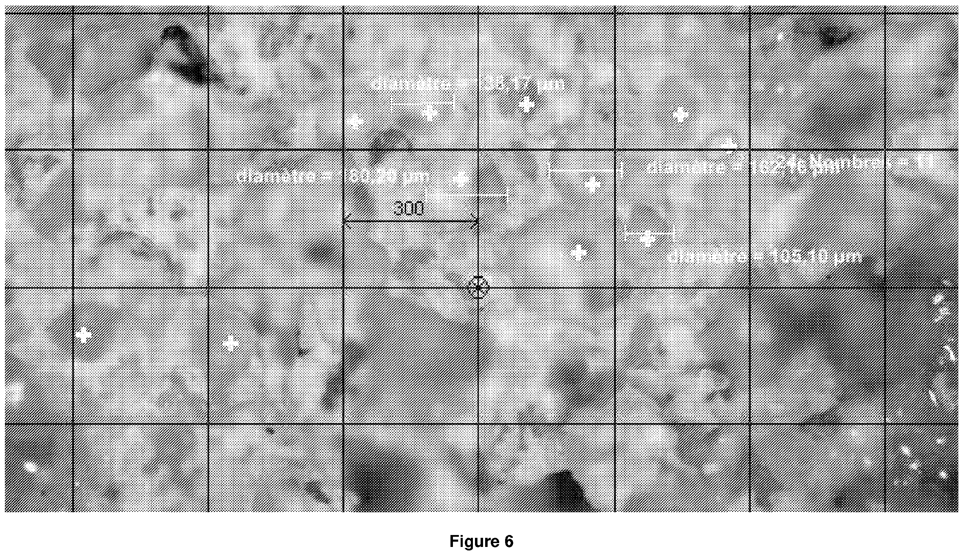

Mesure des diamètres de pores du matériau isolant : Sur la figure 6, on observe des tailles de pores essentiellement inférieures à 200$\mu$m.

II. F. Exemple 6 : fort taux de liant, avec OPC, avec charge creuse et avec ou sans charge réactive

II. F. 1 - Préparation des liants

Les composants suivants ont été ajoutés dans un récipient :

| Composant | Liant ettringitique avec charges creuses et réactives L6 | Liant ettringitique avec charges creuses et sans Laitier L7 |
|---|---|---|
| **Liant hydraulique** :<br>Ciment portland 52,5R (Lafarge Le Havre)<br>Aluminate de calcium Secar 51® (Kerneos)<br>Anhydrite Francis Flower<br>Semi-hydrate Prestia Creation | 4,5 g<br><br>35,06 g<br><br>10,52 g<br>1,17 g | 4,5 g<br><br>35,06 g<br><br>10,52 g<br>1,17 g |
| **Charges réactives** :<br>Laitier (*) | 5 g | |

(suite)

| | | |
|---|---|---|
| **Charges réactives :** Fumée de silice Rw Q1 Fuller | 5 g | 5 g |
| **Dispersant :** Compac 500 | 0,36 g | 0,36 g |
| **Ether de cellulose:** Tylose H300P2 | 0,10 g | 0,10 g |
| **Charges:** Durcal 2 | 10 g | 15 g |
| Sable Sifraco BR36 | 28 g | 28 g |
| **Eau de gachâge** | 22 g | 22 g |
| (*) cf exemple 4 | | |

Les composants sont mélangés à l'aide d'un batteur électrique 30 secondes à faible vitesse (graduation 1) puis 1 minute 30 secondes à grande vitesse (graduation 5). On obtient ainsi un coulis de ciment.

II. F. 2 - Génération de la mousse aqueuse

Mélange dans un bol des produits suivants :

- 4 g d'agent moussant Empicol ESC/3L (Sodium Laureth ether sulfate),
- 0,1 g : Gomme de Xanthane,
- 0,1 g de sulfate de lithium,
- 92,8 g d'eau

A l'aide du batteur électrique, on mélange à grande vitesse durant 5 minutes jusqu'à l'obtention d'une mousse aqueuse homogène et compacte de densité 50 kg.m$^3$.

II. F. 3 - Préparation de la mousse minérale

On incorpore 30 grammes de mousse aqueuse dans 100g de coulis de ciment préparé ci-dessus à l'aide du batteur électrique pendant 3 minutes à vitesse moyenne (graduation 3).

II. F. 4 - Coulage et séchage de la mousse minérale

Idem II.C.4

II. F. 5 - Composition de la mousse minérale (Liant 1 avec Laitiers et charges creuses et Liant 1 avec charges creuses sans Laitiers)

| Composition | % (poids) Liant L6 | % (poids) Liant L7 |
|---|---|---|
| Liant | 32,31 | 32,31 |
| Charge réactive | 6,31 | 3,15 |
| Charge | 24,08 | 27,23 |
| Eau | 35,95 | 35,95 |
| Agent moussant | 0,92 | 0,92 |

(suite)

| Composition | % (poids) Liant L6 | % (poids) Liant L7 |
|---|---|---|
| Autres additifs | 0,43 | 0,43 |

II. F. 6 - Caractérisation du matériau isolant obtenu

- Densité : avec liant L6 194 Kg/m$^3$,
  Avec liant L7 143 Kg/m$^3$

- Porosité : avec liant L6 91%
  Avec liant L7 94%

- Résistance à la compression à 3 heures :

  avec liant L6 Rc = 0,2 MPa

  Avec liant L7 Rc < 0,2 MPa

- Coefficient de conductivité thermique :

  avec liant L6 $\lambda$ = 0,053 W/m.°C

  Avec liant L7 $\lambda$ = 0,045 W/m.°C

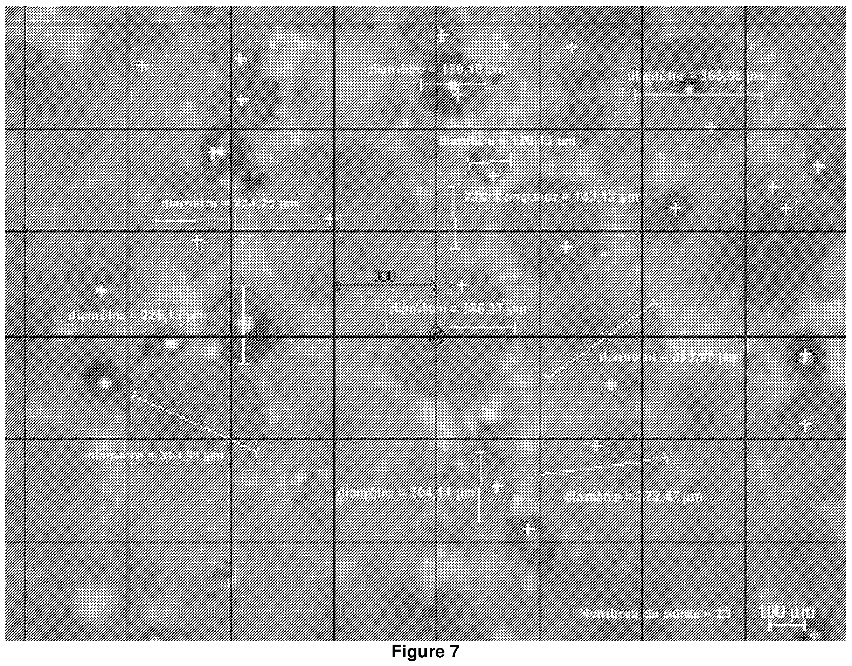

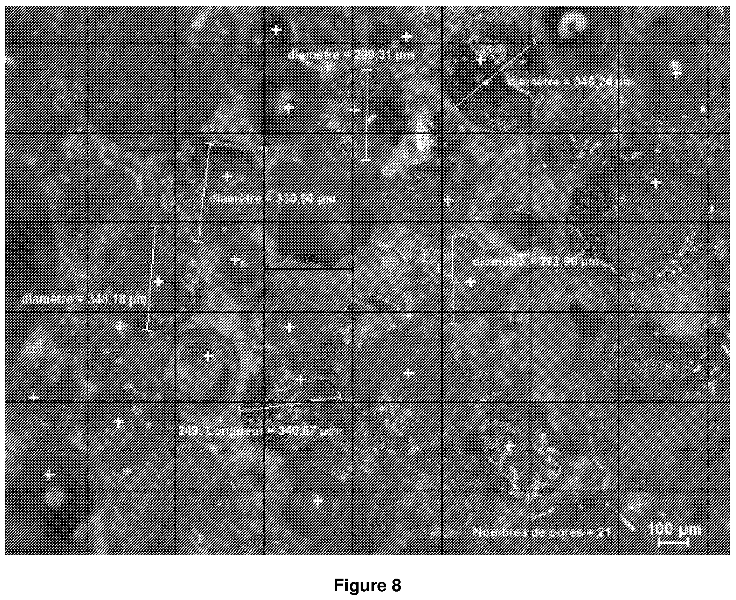

Mesure des diamètres de pores du matériau isolant :
Avec liant L6 : sur la figure 7 on observe des tailles de pores essentiellement inférieures à 400 $\mu$m.
Avec liant L7 : sur la figure 8 on observe des tailles de pores essentiellement inférieures à 350 $\mu$m

II. G. Exemple 7 : fort taux de liant, sans OPC, avec charge creuse de type aérogel de silice

II. G. 1 - Préparation du liant

Les composants suivants ont été ajoutés dans un récipient

| Composant | Liant ettringitique avec charges creuses et réactives L8 |
|---|---|
| **Liant hydraulique** : Ciment portland 52,5R (Lafarge Le Havre) Aluminate de calcium Secar 51 ® (Kerneos) Semi-hydrate Prestia Creation Acide Tartrique | - 42 g 18 g 0,1 g |
| **Charges réactives** : Fumée de silice Rw Q1 Fuller | 5,20 g |
| **Charge creuse** Aérogel de silice | 11,0 g |
| **Dispersant** : Compac 500 | 0,36 g |
| **Microfibres de cellulose** : Arbocel® 40 (CFF) longueur 0,45-1 $\mu$m. | 0,20 g |
| **Ether de Cellulose** | |

(suite)

| | |
|---|---|
| **Microfibres de cellulose** :<br>Tylose H300P2 | 0,11 g |
| **Charges:**<br>Durcal 2 | 23 g |
| **Eau de gâchage** | 30 g |

Les composants sont mélangés à l'aide d'un batteur électrique 30 secondes à faible vitesse (graduation 1) puis 1 minute 30 secondes à grande vitesse (graduation 5). On obtient ainsi un coulis de ciment.

II. G. 2 - Génération de la mousse aqueuse

Mélange dans un bol des produits suivants :

- 4 g d'agent moussant Empicol (Sodium Laureth ether sulfate),
- 0,1 g de sulfate de lithium,
- 92,8 g d'eau

A l'aide du batteur électrique, on mélange à grande vitesse durant 5 minutes jusqu'à l'obtention d'une mousse aqueuse homogène et compacte de densité 50 kg.m$^3$.

II. G. 3 - Préparation de la mousse minérale

On incorpore 30 grammes de mousse aqueuse dans 100g de coulis de ciment préparé ci-dessus à l'aide du batteur électrique pendant 3 minutes à vitesse moyenne (graduation 3).

II. G. 4- Coulage et séchage de la mousse minérale

Idem II. C

II. G. 5 - Composition de la mousse minérale

| Composition | L8 %<br>(en poids) |
|---|---|
| Liant | 35,50 |
| Charge réactive | 3,08 |
| Charge creuse | 6,51 |
| Charge | 13,61 |
| Eau | 39,83 |
| Agent moussant | 0,92 |
| Autres additifs | 0,53 |

II. G. 6 - Caractérisation du matériau isolant obtenu

- Densité : 236 Kg/m$^3$,
- Porosité : 90,3%
- Résistance à la compression à 3 et 24 heures : Rc <0,2 MPa, Rc 28 jours= 0,4 MPa

- Coefficient de conductivité thermique : $\lambda$ = 0,061W/m.°C

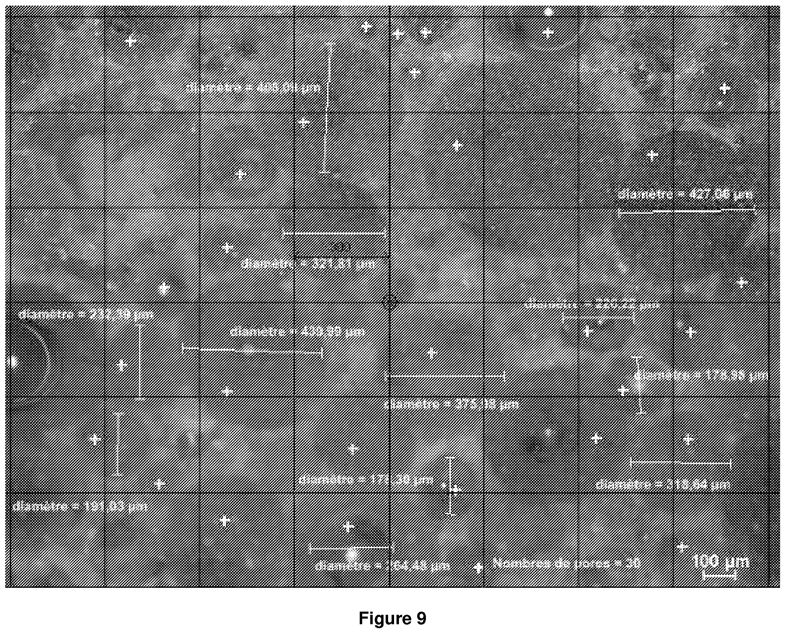

Mesure des diamètres de pores du matériau isolant : sur la figure 9 on observe des tailles de pores essentiellement inférieures à 450 $\mu$m

II. H. Exemple 8 : fort taux de liant, avec OPC, charge réactive de type fumée de silice

II. H. 1 - Préparation du liant

Les composants suivants ont été ajoutés dans un récipient

| Composant | Liant ettringitique avec charges creuses et réactives L9 | Liant ettringitique avec charges creuses et réactives L10 |
|---|---|---|
| **Liant hydraulique** :<br>Ciment portland 52,5R (Lafarge Le Havre) | 8,25 g | 8,25 g |
| Aluminate de calcium Secar 51 ® (Kerneos) | 35,06 g | 35,06 g |
| Anhydrite Francis Flower | 11,69 g | 11,69 g |
| Acide Tartrique | 0,1 g | 0,1 g |
| **Charges réactives** :<br>**Laitier** (*)<br>Fumée de silice Rw Q1 Fuller | 5,20 g | **5,0** g<br>5,20 g |
| **Dispersant** :<br>Compac 500 | 0,38 g | 0,11 g |
| **Résine**<br>Vinnapass 5011 L | 3,20 g | 3,20 g |
| **Ether de Cellulose**<br>Tylose H300P2 | 0,11 g | 0,11 g |
| **Charges:**<br>Sable Palvadeau 0-0,315 mm | 16,51 g | 16,51 g |
| Durcal 2 | 19,5 g | 14,5 g |
| **Eau de gachâge** | 22 g | 22 g |
| (*) cf exemple 4 | | |

Les composants sont mélangés à l'aide d'un batteur électrique 30 secondes à faible vitesse (graduation 1) puis 1 minute 30 secondes à grande vitesse (graduation 5). On obtient ainsi un coulis de ciment.

II. H.2 - Génération de la mousse aqueuse

Mélange dans un bol des produits suivants :

- 1 g d'agent moussant Glucopon CSUP 600 (Alkyl polyglucoside ether),

- 0,3 g de Gluadin (hydrolysat de protéine de blé),

- 0,3 g de carbonate de Lithium

- 0,1 g d'éther de cellulose H300P2

- 98,3 g d'eau

A l'aide du batteur électrique, on mélange à grande vitesse durant 5 minutes jusqu'à l'obtention d'une mousse aqueuse homogène et compacte de densité 50 kg.m$^3$.

II. H. 3 - Préparation de la mousse minérale

On incorpore 30 grammes de mousse aqueuse dans 100g de coulis de ciment préparé ci-dessus à l'aide du batteur électrique pendant 3 minutes à vitesse moyenne (graduation 3).

II. H. 4 - Coulage et séchage de la mousse minérale

Idem II. C. 4.

II. H. 5 - Composition de la mousse minérale

| Composition | L9 % (en poids) | L10 % (en poids) |
|---|---|---|
| Liant | 34,68 | 34,68 |
| Charge réactive | 3,28 | 6,56 |
| Charge | 22,70 | 19,43 |
| Eau | 36,23 | 36,23 |
| Agent moussant | 0,62 | 0,62 |
| Autres additifs | 2,49 | 2,49 |

II. H. 6 - Caractérisation du matériau isolant obtenu

- Densité : sans Laitier 212 Kg/m$^3$, avec Laitier 300 Kg/m$^3$

- Porosité : sans Laitier 90,3%, avec Laitier 80%

- Résistance à la compression à 3 heures : Rc < 0,2 MPa, Rc à 24 heures : 0,5 MPa avec laitier et <0,5 MPa sans laitier. Rc à 28j sans laitier : 0,6 MPa

- Coefficient de conductivité thermique : $\lambda$ = W/m.°C, avec laitier : 0,102 W/m.°C

II. I. Exemple 9 : fort taux de liant, avec OPC, charge réactive de type fumée de silice + agent Hydrophobe

II. I. 1 - Préparation du liant

Les composants suivants ont été ajoutés dans un récipient

| Composant | Liant ettringitique avec charges réactives L11 |
|---|---|
| **Liant hydraulique** : Ciment portland 52,5R (Lafarge Le Havre) | 8,25 g |
| Aluminate de calcium Secar 51 ® (Kerneos) | 35,06 g |
| Semi-hydrate Prestia creation | 11,69 g |
| Acide Tartrique | 0,1 g |

(suite)

| | |
|---|---|
| **Charges réactives** :<br>fumée de silice Rw Q1 Fuller | 4 g |
| **Dispersant** :<br>Compac 500 | 0,38 g |
| **Résine**<br>Vinnapass 8031 H | 0,7 g |
| **Ether de Cellulose**<br>Tylose H300P2 | 0,11 g |
| **Charges:**<br>Sable Palvadeau 0-0,315 mm<br>Durcal 2 | 17,8 g<br>22 g |
| **Eau de gâchage** | 22 g |

Les composants sont mélangés à l'aide d'un batteur électrique 30 secondes à faible vitesse (graduation 1) puis 1 minute 30 secondes à grande vitesse (graduation 5). On obtient ainsi un coulis de ciment.

II. I.2 - Génération de la mousse aqueuse

Mélange dans un bol des produits suivants :

- 7 g d'agent moussant Neopor®600 (protéine animale),

- 0,3 g de carbonate de Lithium

- 92,7 g d'eau

A l'aide du batteur électrique, on mélange à grande vitesse durant 5 minutes jusqu'à l'obtention d'une mousse aqueuse homogène et compacte de densité 50 kg.m$^3$.

II. I.4 - Coulage et séchage de la mousse minérale

Idem II.C.4

II. I.5 - Composition de la mousse minérale

| Composition | Formule L11 % (en poids) |
|---|---|
| Liant | 34,68 |
| Charge réactive | 2,52 |
| Charge | 25,09 |
| Eau | 35,85 |
| Agent moussant | 1,00 |
| Autres additifs | 0,91 |

II. I.6 - Caractérisation du matériau isolant obtenu

- Densité : 214 Kg/m$^3$,

- Porosité : 90,1%,

- Résistance à la compression à 3 heures : Rc < 0,2 MPa, Rc à 28j: 0,7 MPa

- Coefficient de conductivité thermique : $\lambda$ = 0,0545 W/m.°C,

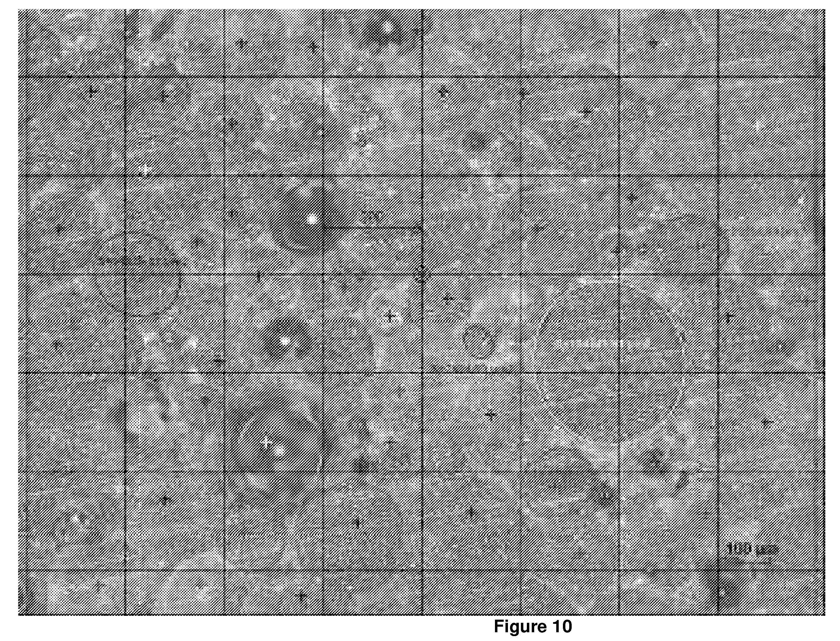

Sur la figure 10, on observe des diamètres de pores essentiellement inférieurs à 300µm.

II. J. Exemple 10 : coulis non moussé avec charge creuse

II. J. 1 - Préparation du liant

Les composants suivants ont été ajoutés dans un récipient

| Composant | Liant ettringitique avec charges creuses et réactives L12 | Liant 100% OPC comparatif Liant ettringitique LC6 |
|---|---|---|
| **Liant hydraulique** : Ciment portland 52,5R (Lafarge Le Havre) | - | 10,0 g |
| Aluminate de calcium Secar 51 ® (Kerneos) | 7 g | - |
| Anhydrite Francis Flower | 2,70 g | - |
| Chaux aérienne | 1,0 g | - |
| Semi-hydrate Prestia creation | 0,3 g | - |
| Carbonate de Sodium | - | 0,5 g |
| Carbonate de Lithium | 0,066 g | - |
| Acide Citrique | 0,05 g | - |
| **Charges réactives** : Laitier (*) | 5,0 g | 5,0 g |
| fumée de silice Rw Q1 Fuller | 5,0 g | 5,0 g |
| **Charges creuses** Thermosilit | 20 g | 20 g |
| **Dispersant** : Conpac 500 | 0,36 g | 0,36 g |
| **Ether de Cellulose** Tylose H300P2 | 0,08 g | 0,08 g |
| **Charges:** Sable Sifraco BR36 | 30,5 g | 30,5 g |
| Durcal 130 | 26,0 g | 26,0 g |
| **Eau de gâchage** | 28 g | 28 g |
| (*) cf exemple 4 | | |

Les composants sont mélangés à l'aide d'un batteur électrique 30 secondes à faible vitesse (graduation 1) puis 1 minute 30 secondes à grande vitesse (graduation 5). On obtient ainsi un coulis de ciment.

II. J.2 - Caractérisation du matériau isolant obtenu

**Résistances Mécaniques**

| Rflexion à 24h (Mpa) | 1,3 | - |
|---|---|---|
| Rflexion à 3h (Mpa) | 1,5 | 0,9 |
| Résistance à la compression (3h Mpa) | 2,3 | - |
| Résistance à la compression 24h (Mpa) | 3,1 | 1,3 |

**Revendications**

**1.** Mousse minérale susceptible d'être utilisée pour la fabrication d'un matériau thermo-isolant à structure cellulaire, ladite mousse comprenant :

- un liant hydraulique caractérisé, avant mise en contact avec de l'eau, en ce qu'il comprend au moins une phase choisie parmi C3A, CA, C12A7, C1 1 A7CaF2, C4A3$ yée lemite), C2A(1 - x)Fx (avec x appartient à ]0, 1 ]), des phases amorphes hydrauliques présentant un ratio molaire C/A compris entre 0,3 et 15 et tel que les teneurs cumulées en Al2O3 de ces phases soient comprises entre 3 et 70 % en poids du poids total du liant hydraulique,
- de 1 à 30% en poids, ce pourcentage étant rapporté au poids total de matière sèche de la mousse minérale, d'au moins une charge choisie parmi les charges réactives,
- au moins un solvant aqueux et/ou non aqueux et
- un gaz tel que de l'air, du dioxyde de carbone ou de l'azote,

le liant hydraulique comportant éventuellement du sulfate de calcium, et /ou éventuellement du ciment portland.

**2.** Mousse minérale selon la revendication 1, telle que le liant hydraulique comporte du sulfate de calcium, et éventuellement du ciment portland.

**3.** Mousse minérale selon la revendication 1 ou 2, telle que le liant hydraulique comportant du sulfate de calcium et du ciment portland.

**4.** Mousse minérale selon l'une quelconque des revendications précédentes qui comprend en outre un composé choisi parmi les agents moussants, les agents entraîneurs d'air et/ou les agents générateurs de gaz.

**5.** Mousse minérale selon l'une quelconque des revendications précédentes, dans laquelle le liant comprend entre 10 et 90% en poids de sulfate de calcium, en poids par rapport au poids total de liant.

**6.** Mousse minérale selon l'une quelconque des revendications précédentes dans laquelle le solvant est de l'eau et le rapport pondéral eau/ liant hydraulique est compris entre 0,1 et 0,7.

**7.** Mousse minérale selon l'une quelconque des revendications précédentes, qui comprend au moins une charge réactive et entre 0,5 et 5% en poids par rapport au poids total de la composition d'au moins un composé activateur de charge réactive.

**8.** Procédé de préparation d'une mousse minérale selon l'une quelconque des revendications 1 à 7 comprenant les étapes suivantes :

a) préparation d'une mousse aqueuse à partir d'une composition comprenant au moins de l'eau et au moins un composé choisi parmi les agents moussants, les entraîneurs d'air, les agents générateurs de gaz,
b) préparation d'un coulis de ciment comprenant

- le mélange avec un solvant et éventuellement au moins un composé choisi parmi les agents tensio-actifs, les entraîneurs d'air, les agents générateurs de gaz, du liant,

c) introduction d'une ou de plusieurs charges en tout ou partie dans la mousse aqueuse et/ou dans le coulis de ciment,
d) mélange de la mousse aqueuse et du coulis.

9. Procédé de préparation d'une mousse minérale selon l'une quelconque des revendications 1 à 7:

   a) préparation d'un coulis de ciment comprenant :
   le mélange avec un solvant et éventuellement au moins un composé choisi parmi les agents tensio-actifs, les entraîneurs d'air, les agents générateurs de gaz, du liant,
   b) injection d'un gaz dans le coulis en maximisant la surface de contact entre l'air et le coulis de ciment, par exemple en utilisant un mélangeur statique.
   c) incorporation d'une ou plusieurs charges en tout ou partie pendant ou après l'étape a.

10. Utilisation de la mousse minérale selon l'une quelconque des revendications 1 à 7 comme élément constitutif pour la réalisation d'une isolation thermique:

   - pour réaliser des panneaux préfabriqués comprenant au moins une couche isolante à base de la mousse minérale,
   - pour réaliser des panneaux sandwiches
   - pour combler les parties creuses des éléments de construction des bâtiments par la mise en place in situ de ladite mousse minérale tels que murs, plafonds, parpaings, portes, gaines,
   - pour réaliser des planchers chauffants par mise en place in situ de la mousse au contact des sous faces des tuyaux,
   - pour réaliser en application extérieure une monocouche présentant une fonction isolante pour le revêtement des bâtiments par mise en place in situ de ladite mousse minérale.

11. Utilisation de la mousse minérale selon l'une quelconque des revendications 1 à 7 comme matériaux réfractaire :

   - pour la réalisation de briques réfractaires,
   - pour réaliser des bétons monolithiques par mise en place in situ de ladite mousse minérale.

12. Matériau thermo-isolant à structure cellulaire, obtenu après durcissement de la mousse minérale selon l'une des revendications 1 à 7,
    ledit matériau présentant une porosité en volume comprise entre 70% et 95%.

13. Matériau thermo-isolant à structure cellulaire selon la revendication 12 qui présente un retrait inférieur à 500$\mu$m/m.

14. Matériau thermo-isolant à structure cellulaire selon les revendications 12 ou 13 qui présente une résistance à la compression Rc à 3 heures supérieure ou égale à 0,2 MPa et un coefficient de conductivité thermique à 20°C, égal ou inférieur à 0,2 W/m.°C.

15. Matériau thermo-isolant à structure cellulaire selon l'une quelconque des revendications 12 à 14, qui comporte de 1 à 80% en poids par rapport au poids total du matériau de charges creuses de faible densité.

**Figure 1**

Figure 2 a)

Figure 2 b)

Figure 2 c)

Figure 3 a)

Figure 3 b)

**Figure 4**

Figure 5

Figure 6

Figure 7

Figure 8

Figure 9

Figure 10

**Europäisches Patentamt**
**European Patent Office**
**Office européen des brevets**

# RAPPORT DE RECHERCHE EUROPEENNE

Numéro de la demande

EP 20 20 5260

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 929 270 A1 (LOZANO AIME JEAN MARIE [FR]; BERTRAND GUY JEAN-ROBERT [FR] ET AL.) 2 octobre 2009 (2009-10-02) * le document en entier * ----- | 1-15 | INV. C04B28/06 C04B28/16 C04B38/02 C04B38/10 |
| X | EP 0 628 523 A1 (SICOWA VERFAHRENSTECH [DE]) 14 décembre 1994 (1994-12-14) * page 4, lignes 10-30 * ----- | 1-15 | |
| X | KR 100 809 804 B1 (KOREA ELECTRIC POWER CORP [KR]) 4 mars 2008 (2008-03-04) * le document en entier * ----- | 1-15 | |
| X | EP 0 151 452 A1 (SICOWA VERFAHRENSTECH [DE]) 14 août 1985 (1985-08-14) * pages 9-10 * ----- | 1-15 | |
| X | GB 1 578 470 A (SHIKOKU KAKEN KOGYO KK) 5 novembre 1980 (1980-11-05) * pages 1-5 * * tableaux 5,8 * ----- | 1-15 | |
| A | GB 1 506 417 A (LAFARGE SA [FR]) 5 avril 1978 (1978-04-05) * pages 2-10 * ----- | 1-15 | **DOMAINES TECHNIQUES RECHERCHES (IPC)** C04B |
| A | GB 2 162 506 A (MISAWA HOMES CO) 5 février 1986 (1986-02-05) * page 3, ligne 6 - page 5, ligne 29 * ----- | 1-15 | |

Le présent rapport a été établi pour toutes les revendications

| Lieu de la recherche | Date d'achèvement de la recherche | Examinateur |
|---|---|---|
| Munich | 5 février 2021 | Gattinger, Irene |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 20 5260

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-02-2021

| Document brevet cité au rapport de recherche | | Date de publication | Membre(s) de la famille de brevet(s) | | Date de publication |
|---|---|---|---|---|---|
| FR 2929270 | A1 | 02-10-2009 | AUCUN | | |
| EP 0628523 | A1 | 14-12-1994 | AT | 156107 T | 15-08-1997 |
| | | | AU | 6326994 A | 15-12-1994 |
| | | | CA | 2125364 A1 | 09-12-1994 |
| | | | CZ | 288929 B6 | 12-09-2001 |
| | | | DE | 4339137 A1 | 15-12-1994 |
| | | | EP | 0628523 A1 | 14-12-1994 |
| | | | FI | 942698 A | 09-12-1994 |
| | | | JP | H08133862 A | 28-05-1996 |
| | | | KR | 950000599 A | 03-01-1995 |
| | | | PL | 303713 A1 | 09-01-1995 |
| | | | US | 5520729 A | 28-05-1996 |
| KR 100809804 | B1 | 04-03-2008 | AUCUN | | |
| EP 0151452 | A1 | 14-08-1985 | AT | 31713 T | 15-01-1988 |
| | | | DE | 3403866 A1 | 08-08-1985 |
| | | | DK | 49485 A | 05-08-1985 |
| | | | EP | 0151452 A1 | 14-08-1985 |
| | | | US | 4670055 A | 02-06-1987 |
| GB 1578470 | A | 05-11-1980 | AUCUN | | |
| GB 1506417 | A | 05-04-1978 | DE | 2547765 A1 | 06-05-1976 |
| | | | FR | 2289460 A1 | 28-05-1976 |
| | | | GB | 1506417 A | 05-04-1978 |
| | | | JP | S5167326 A | 10-06-1976 |
| GB 2162506 | A | 05-02-1986 | AU | 564282 B2 | 06-08-1987 |
| | | | DE | 3514698 A1 | 06-02-1986 |
| | | | FR | 2568165 A1 | 31-01-1986 |
| | | | GB | 2162506 A | 05-02-1986 |
| | | | JP | H0148237 B2 | 18-10-1989 |
| | | | JP | S6136183 A | 20-02-1986 |
| | | | KR | 860001030 A | 22-02-1986 |
| | | | US | 4683003 A | 28-07-1987 |

EPO FORM P0460

Pour tout renseignement concernant cette annexe : voir Journal Officiel de l'Office européen des brevets, No.12/82

**EP 3 792 231 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2913351 A1
- WO 2008020246 A
- WO 2006067064 A
- US 4218490 A
- US 7288147 B
- US 2005126781 A
- GB 1506417 A
- US 4670055 A
- GB 1578470 A
- GB 2162506 A
- WO 0023395 A
- RU 2305087
- DE 3227079
- EP 2093201 A
- JP 06056497 B
- EP 0121524 A
- US 20050126781 A
- US 4731389 A
- US 5373079 A
- US 20050182174 A
- EP 0241230 A
- EP 0113593 A